# EUROPEAN PATENT APPLICATION

(11) **EP 4 750 068 A1**
(43) Date of publication of application: **27.05.2026**
(21) Application number: 24881160.6
(22) Date of filing: 05.08.2024
(51) Int. Cl.: H04N 21/472

(54) **VIDEO GENERATION METHOD, ELECTRONIC DEVICE AND STORAGE MEDIUM**

(30) Priority: 27.10.2023 CN 202311418278; 29.12.2023 CN 202311871711
(71) Applicant: Honor Device Co., Ltd., Shenzhen, Guangdong 518040 (CN)
(72) Inventor: LUO, Lan, Shenzhen, Guangdong 518040 (CN); YI, Jie, Shenzhen, Guangdong 518040 (CN); WANG, Di, Shenzhen, Guangdong 518040 (CN)
(74) Representative: Gill Jennings & Every LLP
(86) International application number: PCT/CN2024/109928
(87) International publication number: WO 2025/086790

(57) **Abstract**

An embodiment of this application provides a video generation method, an electronic device, and a storage medium, which are applied to the field of terminal technologies. The method includes: receiving a first operation of a user triggering generation of a target video corresponding to a target theme; in response to the first operation, displaying an interface, of a voice assistant, that includes at least one candidate object corresponding to a keyword of the target theme; receiving a second operation of the user on a target object in the at least one candidate object; in response to the second operation, displaying a first material corresponding to the target object on the interface of the voice assistant, where the first material is an image or a video found by the voice assistant from a gallery; receiving a third operation of the user triggering generation of the target video; and in response to the third operation, displaying a thumbnail of the target video on the interface of the voice assistant, where the target video is generated based on the first material corresponding to the target object. In this way, a video of a theme expected by the user can be quickly generated. This simplifies a step of generating the video, so that user experience is better.

## Description

This application claims priority to Chinese Patent Application No. 202311418278.6, filed with the China National Intellectual Property Administration on October 27, 2023 and entitled "LARGE MODEL-BASED VIDEO PRODUCTION METHOD AND ELECTRONIC DEVICE" and Chinese Patent Application No. 202311871711.1, filed with the China National Intellectual Property Administration on December 29, 2023 and entitled "VIDEO GENERATION METHOD, ELECTRONIC DEVICE, AND STORAGE MEDIUM", which are incorporated herein by reference in their entireties.

### TECHNICAL FIELD

Embodiments of this application relate to the field of terminal technologies, and in particular, to a video generation method, an electronic device, and a storage medium.

### BACKGROUND

As short videos rapidly gain popularity, a user has an increasing need to quickly generate a video on an electronic device (for example, a mobile phone or a tablet computer). However, steps for the user to generate a video based on images in a gallery are cumbersome, making it impossible to quickly generate a video of user's expected theme.

### SUMMARY

Embodiments of this application provide a video generation method, an electronic device, and a storage medium, so that a video of a theme expected by a user can be quickly generated. This simplifies a step of generating the video, so that user experience is better.

To achieve the foregoing objectives, the following technical solutions are used in embodiments of this application.

According to a first aspect, a video generation method is provided and applied to an electronic device including a voice assistant. The video generation method may include:
receiving a first operation of a user triggering generation of a target video corresponding to a target theme; in response to the first operation, displaying an interface of a voice assistant, where the interface of the voice assistant includes at least one candidate object corresponding to a keyword of the target theme; receiving a second operation of the user on a target object in the at least one candidate object; in response to the second operation, displaying a first material corresponding to the target object on the interface of the voice assistant, where the first material is an image or a video found by the voice assistant from a gallery of the electronic device; receiving a third operation of the user triggering generation of the target video; and in response to the third operation, displaying a thumbnail of the target video on the interface of the voice assistant, where the target video is generated based on the first material corresponding to the target object.

It may be understood as that the electronic device receives the operation of the user indicating to generate the target video, the voice assistant interacts with the user, and an entire interaction process of generating the target video may be displayed on the interface of the voice assistant. This simplifies a step of generating the video, and helps improve user experience.

In a possible implementation of the first aspect, in a process of displaying the first material corresponding to the target object on a first interface, the video generation method may further include:
receiving a fourth operation; and in response to the fourth operation, displaying, on the interface of the voice assistant, a target material obtained by performing material processing on the first material corresponding to the target object, where the material processing includes at least one of material addition, material replacement, material deletion, or material sequence reordering.

It may be understood as that after the first material corresponding to the target object is displayed on the interface of the voice assistant, the electronic device may perform operations such as addition, replacement, deletion, and material sequence reordering on the first material, so that the target material obtained by performing the material processing is a material that is satisfactory to the user.

In another possible implementation of the first aspect, the video generation method may further include:
if the fourth operation of the user indicates a quantity based on which the material processing is to be performed on the first material, performing the material processing based on the indicated quantity; or if the fourth operation of the user does not indicate a quantity based on which the material processing is to be performed on the first material, performing the material processing on the first material based on a preset quantity, where the preset quantity is less than a quantity threshold; when speech or text semantics corresponding to the fourth operation does not indicate the quantity based on which the material processing is to be performed on the first material, the preset quantity is a quantity for a level corresponding to the speech or text semantics; and different levels correspond to different quantities.

It may be understood as that when receiving the quantity, explicitly indicated by the user, of materials to be processed, the electronic device performs the material processing based on the indicated quantity. For example, the user indicates, through voice, to "delete ten painting materials", and the electronic device deletes ten materials from the first material. When an indication operation of the user received by the electronic device does not indicate the quantity based on which the material processing is to be performed, the material processing is performed on the first material based on the preset quantity. For example, a voice indication of the user is "delete most of the materials", and the electronic device may delete half of the materials in the first material. For another example, a voice indication of the user is "add a small quantity of materials of the second daughter painting". After finding the materials of the second daughter painting, the electronic device may add the materials of the second daughter painting to the first material, and a quantity of added materials is less than 30% of a quantity of materials in the first material.

In another possible implementation of the first aspect, the material processing is material addition, the target material displayed on the interface of the voice assistant includes total materials obtained by adding a second material for the target object, and the total materials include the first material and the second material.

It may be understood as that in response to the operation of the user, the electronic device adds the second material to the first material, and the total materials after addition is displayed on the interface of the voice assistant.

In another possible implementation of the first aspect, the material processing is material addition, and the video generation method may further include:
in response to the fourth operation, displaying first prompt information on the interface of the voice assistant, where the first prompt information is used to inform that a quantity of total materials corresponding to the target object reaches an upper limit.

That is, when the electronic device receives an operation of the user indicating material addition, and the quantity of total materials corresponding to the target material reaches the upper limit, the user may be informed in a manner of displaying the prompt information on the interface of the voice assistant.

In another possible implementation of the first aspect, the video generation method may further include:
receiving a fifth operation; and in response to the fifth operation, displaying a third material on the interface of the voice assistant, where the third material includes materials obtained by deleting a part of the total materials and adding a fourth material.

It may be understood as that when the quantity of total materials corresponding to the target object reaches the upper limit, the electronic device may, in response to the operation of the user, delete the part of the total materials and then add another material.

In another possible implementation of the first aspect, the material processing is material replacement, the target material displayed on the interface of the voice assistant includes a sixth material obtained by replacing a part of the material of the target object with a fifth material, and the sixth material includes the fifth material and a part of the first material.

That is, the electronic device may replace the part of the material of the target object in response to the operation of the user, so that materials of the target object after replacement are all materials that are satisfactory to the user.

In another possible implementation of the first aspect, the material processing is material deletion, and the target material displayed on the interface of the voice assistant includes a part of the first material after material deletion.

That is, when the target material displayed on the interface of the voice assistant includes materials that the user does not like, the electronic device may delete a part of the target material in response to the operation of the user, so that the materials after deletion are all materials that are satisfactory to the user.

In another possible implementation of the first aspect, the material processing is material sequence reordering, the target material displayed on the interface of the voice assistant includes a seventh material, the seventh material includes same materials as those in the first material, and a sequence of the materials in the seventh material is different from a sequence of the materials in the first material.

That is, the electronic device may adjust a sequence of the materials of the target object in response to the operation of the user, so that a video generated based on the materials after sequence reordering better meets a user requirement, and user experience is improved.

In another possible implementation of the first aspect, the video generation method may further include:
receiving a sixth operation of the user; and in response to the sixth operation, editing an object name of the at least one candidate object displayed on the interface of the voice assistant, where the editing includes name addition, name modification, or name deletion.

In another possible implementation of the first aspect, the video generation method may further include:
receiving a seventh operation of the user; and in response to the seventh operation, displaying a target interface, where the target interface includes the at least one candidate object and another candidate object. The receiving a second operation of the user on a target object in the at least one candidate object includes: receiving the second operation of the user on the target object in the candidate objects on the target interface.

In another possible implementation of the first aspect, the video generation method may further include:
if a deletion operation of the user on the target video is received, in response to the deletion operation, stopping displaying a thumbnail of the target video on the interface of the voice assistant; and if a sharing operation of the user on the target video is received, in response to the sharing operation, displaying a sharing interface on the interface of the voice assistant.

That is, the electronic device may perform, in response to a trigger operation of the user, operations such as deletion and sharing on a generated target video. Therefore, the user does not need to download the target video to the electronic device for local storage, and an operation of deleting or sharing the target video can be implemented. This improves user experience.

If a template change operation of the user on the target video is received, in response to the template change operation, a video obtained by changing a template is displayed on the interface of the voice assistant; and if a duration adjustment operation of the user on the target video is received, in response to the duration adjustment operation, a video obtained by adjusting duration is displayed on the interface of the voice assistant.

In another possible implementation of the first aspect, the first operation is a voice indication operation, and after the receiving a first operation of a user triggering generation of a target video corresponding to a target theme, the method further includes:
performing semantic analysis on first speech information indicated by the first operation; and if semantics corresponding to the first speech information is recognized, determining, based on the recognized semantics, the keyword corresponding to the target theme; or if semantics corresponding to the first speech information is not recognized, or no candidate object that matches the keyword is identified from the gallery, displaying second prompt information on the interface of the voice assistant, where the second prompt information is used to inform to adjust the voice indication operation.

It may be understood as that, after the electronic device receives an operation of the user indicating, through voice, to generate a video, the electronic device performs semantic analysis on received speech information of the user. The electronic device may determine, based on a semantic analysis result, whether the keyword corresponding to the target theme is identified.

In another possible implementation of the first aspect, after the receiving a second operation of the user on a target object in the at least one candidate object, the video generation method may further include:
performing semantic analysis on second speech information indicated by the second operation; and if semantics corresponding to the second speech information is not recognized, or a target object that matches the semantics corresponding to the second speech information is not identified from the at least one candidate object, displaying third prompt information on the interface of the voice assistant, where the third prompt information is used to inform the user to select another candidate object.

In another possible implementation of the first aspect, the candidate object is a person, an image of the candidate object is displayed on the interface of the voice assistant, the image of the candidate object includes a portrait, and the target theme includes a keyword related to the person.

According to a second aspect, this application provides an electronic device. The electronic device includes: one or more processors; and a memory. The memory stores one or more computer programs. The one or more computer programs include instructions. When the instructions are executed by the electronic device, the electronic device is enabled to perform the video generation method according to any one of the first aspect.

According to a third aspect, this application provides a computer-readable storage medium. The computer-readable storage medium stores instructions. When the instructions are run on an electronic device, the electronic device is enabled to perform the video generation method according to any one of the first aspect.

According to a fourth aspect, this application provides a computer program product. The computer program product includes computer instructions. When the computer instructions are run on an electronic device, the electronic device is enabled to perform the video generation method according to any one of the first aspect.

It may be understood that the electronic device according to the second aspect, the computer storage medium according to the third aspect, and the computer program product according to the fourth aspect are all used to perform the corresponding method provided above. Therefore, for beneficial effect that can be achieved, refer to beneficial effect in the corresponding method provided above. Details are not described herein again.

### BRIEF DESCRIPTION OF THE DRAWINGS

FIG. 1 is a diagram of a structure of an electronic device according to an embodiment of this application;
FIG. 2 is a diagram of a software structure of an electronic device according to an embodiment of this application;
FIG. 3A, FIG. 3B, and FIG. 3C are an example diagram 1 of accessing to an intelligent interaction interface according to an embodiment of this application;
FIG. 4A, FIG. 4B, and FIG. 4C are example diagrams 2 of accessing to an intelligent interaction interface according to an embodiment of this application;
FIG. 5A, FIG. 5B, and FIG. 5C are example diagrams 3 of accessing to an intelligent interaction interface according to an embodiment of this application;
FIG. 6A, FIG. 6B, and FIG. 6C are example diagrams 4 of accessing to an intelligent interaction interface according to an embodiment of this application;
FIG. 7A, FIG. 7B, and FIG. 7C are example diagrams 5 of accessing to an intelligent interaction interface according to an embodiment of this application;
FIG. 8A, FIG. 8B, and FIG. 8C are example diagrams 6 of accessing to an intelligent interaction interface according to an embodiment of this application;
FIG. 9A, FIG. 9B, FIG. 9C, FIG. 9D, and FIG. 9E example diagrams 1 of a video generation method according to an embodiment of this application;
FIG. 10A and FIG. 10B are example diagrams 2 of a video generation method according to an embodiment of this application;
FIG. 11A and FIG. 11B are example diagrams 3 of editing a portrait name according to an embodiment of this application;
FIG. 12A, FIG. 12B, FIG. 12C, FIG. 12D, FIG. 12E, and FIG. 12F are example diagrams of material addition according to an embodiment of this application;
FIG. 13A, FIG. 13B, FIG. 13C, FIG. 13D, and FIG. 13E are other example diagrams of material addition according to an embodiment of this application;
FIG. 14A, FIG. 14B, FIG. 14C, FIG. 14D, FIG. 14E, and FIG. 14F are example diagrams of material replacement according to an embodiment of this application;
FIG. 15A, FIG. 15B, FIG. 15C, FIG. 15D, FIG. 15E, and FIG. 15F are example diagrams of material deletion according to an embodiment of this application;
FIG. 16A, FIG. 16B, and FIG. 16C are example diagrams of material sequence reordering according to an embodiment of this application;
FIG. 17A, FIG. 17B, and FIG. 17C are example diagrams of editing a target video according to an embodiment of this application;
FIG. 18A, FIG. 18B, and FIG. 18C are example diagrams of video generation according to an embodiment of this application;
FIG. 19A and FIG. 19B are other example diagrams of editing a target video according to an embodiment of this application;
FIG. 20A, FIG. 20B, FIG. 20C, FIG. 20D, and FIG. 20E are still other example diagrams of editing a target video according to an embodiment of this application; and
FIG. 21 is still another example diagram of editing a target video according to an embodiment of this application.

### DESCRIPTION OF EMBODIMENTS

The following describes technical solutions in embodiments of this application with reference to accompanying drawings in embodiments of this application. In descriptions of embodiments of this application, unless otherwise specified, "/" means "or". For example, A/B may represent A or B. In this specification, "and/or" is merely an association relationship for describing associated objects and represents that three relationships may exist. For example, A and/or B may represent the following three cases: Only A exists, both A and B exist, and only B exists.

Hereinafter, the terms "first" and "second" are merely intended for a purpose of description, and cannot be understood as indicating or implying relative importance or implying a quantity of indicated technical features. Therefore, a feature defined by "first" or "second" may explicitly or implicitly include one or more features. In descriptions of embodiments of this application, unless otherwise specified, "a plurality of' means two or more.

In embodiments of this application, the word such as "example" or "for example" is used to represent an example, an instance, or a description. Any embodiment or design scheme described as "example" or "for example" in embodiments of this application should not be explained as being more preferred or having more advantages than another embodiment or design scheme. Exactly, use of the term such as "example" or "for example" is intended to present a related concept in a specific manner.

An embodiment of this application provides a video generation method, which is applied to an electronic device including a voice assistant. The method includes: receiving, by the voice assistant, a first operation of a user; in response to the first operation, displaying a first interface that includes at least one candidate object; receiving, by the voice assistant, a second operation of the user on a target object in the at least one candidate object; in response to the second operation, displaying a first material corresponding to the target object on the first interface, where the first material is an image or a video found by the voice assistant from a gallery of the electronic device; receiving, by the voice assistant, a third operation of the user triggering generation of a target video; and in response to the third operation, displaying a thumbnail of the target video on the first interface, where the target video is generated based on the first material corresponding to the target object. Therefore, in response to a trigger operation of the user, the voice assistant may quickly generate a video expected by the user. This provides video generation efficiency.

The foregoing first operation and the foregoing second operation of the user may be manual trigger operations of the user, or may be voice indication operations of the user. This is not limited herein.

For example, the video generation method provided in embodiments of this application may be applied to electronic devices with a display, such as a mobile phone, a tablet computer, a personal computer (personal computer, PC), a personal digital assistant (personal digital assistant, PDA), a smartwatch, a netbook, a wearable electronic device, an augmented reality (augmented reality, AR) device, a virtual reality (virtual reality, VR) device, a vehicle-mounted device, and a smart car. This is not limited in embodiments of this application.

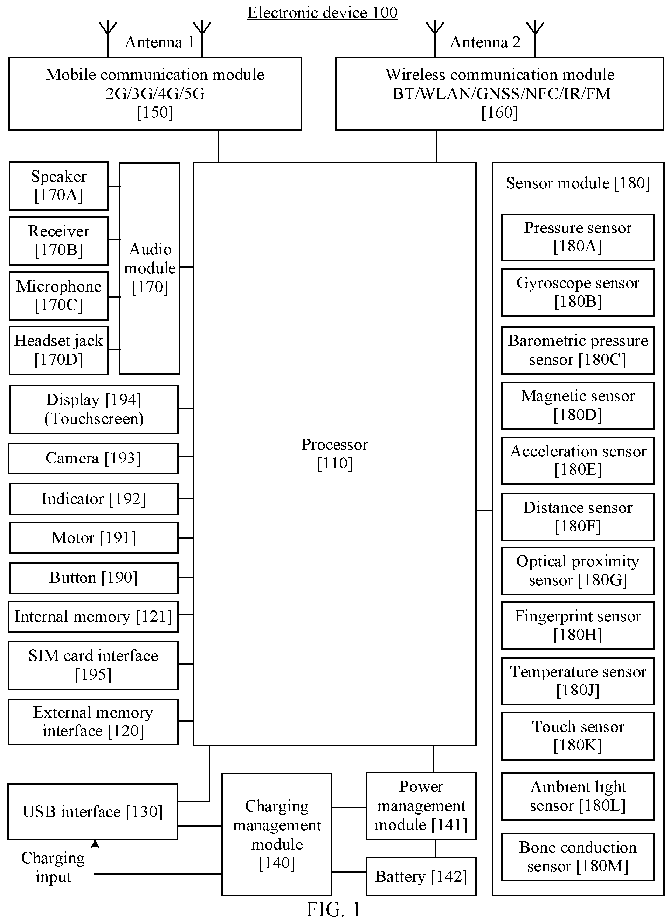

FIG. 1 is a diagram of a structure of an electronic device according to an embodiment of this application.

An electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that a structure shown in this embodiment of this application does not constitute a specific limitation on the electronic device 100. In some other embodiments of this application, the electronic device 100 may include more or fewer components than those shown in the figure, or combine some components, or split some components, or have different component arrangements. The components shown in the figure may be implemented in hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU) and/or the like. Different processing units may be independent components, or may be integrated into one or more processors.

The controller may be a nerve center and a command center of the electronic device 100. The controller may generate an operation control signal based on instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data recently used or cyclically used by the processor 110. If the processor 110 needs to use the instructions or the data again, the processor 110 may directly invoke the instructions or the data from the memory. This avoids repeated access, and reduces waiting time of the processor 110, so that efficiency of a system is improved.

The charging management module 140 is configured to receive a charging input from a charger.

The power management module 141 is configured to connect the battery 142, the charging management module 140, and the processor 110.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a solution, applied to the electronic device 100, for wireless communication including 2G, 3G, 4G, 5G, and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same device as at least some modules of the processor 110.

The wireless communication module 160 may provide a solution that is applied to the electronic device 100 and that is used for wireless communication such as a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more devices integrating at least one communication processing module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 of the electronic device 100 are coupled, and the antenna 2 and the wireless communication module 160 are coupled, so that the electronic device 100 can communicate with a network and another device by using a wireless communications technology. The wireless communication technology may include a global system for mobile communication (global system for mobile communication, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, GNSS, WLAN, NFC, FM, an IR technology, and/or the like. The GNSS may include a global positioning system (global positioning system, GPS), a global navigation satellite system (global navigation satellite system, GLONASS), a beidou navigation satellite system (beidou navigation satellite system, BDS), a quasi-zenith satellite system (quasi-zenith satellite system, QZSS), and/or a satellite based augmentation system (satellite based augmentation system, SBAS).

The electronic device 100 implements a display function by using the GPU, the display 194, the application processor, and the like. The GPU is a microprocessor for image processing and is connected to the display 194 and the application processor. The GPU is configured to perform mathematical and geometrical calculation for graphics rendering. The processor 110 may include one or more GPUs that execute program instructions to generate or change display information.

The display 194 is configured to display an image, a video, and the like. The display 194 includes a display panel. The display panel may use a liquid crystal display (liquid crystal display, LCD), an organic light-emitting diode (organic light-emitting diode, OLED), an active-matrix organic light emitting diode or an active matrix-organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), and the like. In some embodiments, the electronic device 100 may include 1 or N displays 194, where N is a positive integer greater than 1.

In this embodiment of this application, the display 194 is used to display a display interface of a voice assistant. When a user interacts with the voice assistant to control the voice assistant to implement a function, the electronic device 100 receives an operation of the user on the display interface of the voice assistant, and in response to the operation of the user, the display 194 displays a corresponding execution result.

The external memory interface 120 may be configured to connect to an external storage card, for example, a micro SD card, to extend a storage capability of the electronic device 100. The external storage card communicates with the processor 110 through the external memory interface 120, to implement a data storage function. For example, files such as music and a video are stored in the external storage card.

The internal memory 121 may be configured to store computer-executable program code, and the executable program code includes instructions. The processor 110 runs instructions stored in the internal memory 121, to perform various functional applications and data processing of the electronic device 100. The internal memory 121 may include a program storage area and a data storage area. The program storage area may store an operating system, an application required for at least one function (such as a sound playback function and an image playback function), and the like. The data storage area may store data (such as audio data and an address book) created during use of the electronic device 100, and the like. In addition, the internal memory 121 may include a high-speed random access memory, or may include a nonvolatile memory, for example, at least one magnetic disk storage device, a flash memory, or a universal flash storage (universal flash storage, UFS).

The electronic device 100 may implement an audio function such as music playback and recording by using the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may further be configured to encode and decode an audio signal. In some embodiments, the audio module 170 may be disposed in the processor 110, or some functional modules of the audio module 170 are disposed in the processor 110.

The speaker 170A, also referred to as a "loudspeaker", is configured to convert an electrical audio signal into a sound signal. The electronic device 100 may be used to listen to music or answer a hands-free call through the speaker 170A.

The receiver 170B, also referred to as an "earpiece", is configured to convert an electrical audio signal into a sound signal. When the electronic device 100 is used to answer a call or receive speech information, the receiver 170B may be put close to a human ear to receive a speech.

The microphone 170C, also referred to as a "mike" or a "mic", is configured to convert a sound signal into an electrical signal. When making a call or sending speech information, a user may make a sound by moving a human mouth close to the microphone 170C, and input a sound signal to the microphone 170C. At least one microphone 170C may be disposed in the electronic device 100. In some other embodiments, two microphones 170C may be provided in the electronic device 100, to collect a sound signal and implement a noise reduction function. In some other embodiments, three, four, or more microphones 170C may alternatively be disposed in the electronic device 100, to collect a sound signal, implement noise reduction, identify a sound source, implement a directional recording function, and the like.

For example, after the microphone 170C of the electronic device receives speech information of a user indicating, through voice, to start the voice assistant, the electronic device starts the voice assistant. During voice interaction between the user and the voice assistant, the microphone 170C may receive speech information of the user indicating, through voice, the voice assistant to perform a function.

The headset jack 170D is configured to connect to a wired headset. The headset jack 170D may be a USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

A software system of the electronic device may use a layered architecture, an event-driven architecture, a microkernel architecture, a microservice architecture, or a cloud architecture. In embodiments of the present invention, an Android system with a layered architecture is used as an example to illustrate a software structure of the electronic device.

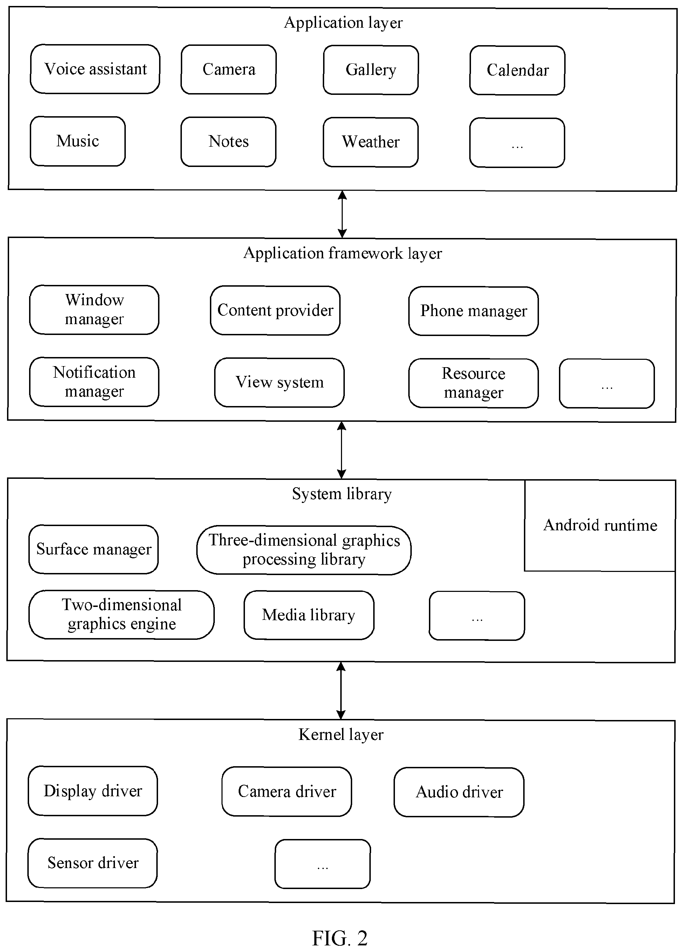

FIG. 2 is a diagram of a software structure of an electronic device according to an embodiment of this application.

It can be understood that, in a layered architecture, software is divided into several layers, and each layer has a clear role and task. Layers communicate with each other through a software interface. In some embodiments, the Android system may include an application program layer (referred to as an application layer for short), an application framework layer (referred to as framework layer for short), a system library, and a kernel layer.

The application layer may include a series of application packages.

As shown in FIG. 2, the application packages include system applications. The system application is an application disposed in the electronic device before the electronic device is delivered from a factory. For example, the system applications may include programs such as Voice Assistant, Camera, Gallery, Calendar, Music, Messages, Memo, and Weather.

In this embodiment of this application, the voice assistant receives an interaction operation between the user and the voice assistant, and displays a recommended candidate theme on an intelligent interaction interface of the voice assistant in response to the operation of the user. The candidate theme includes at least one theme recommended by the voice assistant based on an image recognition result of the gallery.

The gallery stores a plurality of images, and the gallery may perform image recognition on the plurality of stored images. For example, the gallery performs clustering processing on the plurality of images, so that the voice assistant may generate at least one candidate theme based on the image recognition result of the gallery.

It should be explained that in this application, that the voice assistant generates the at least one candidate theme based on the image recognition result of the gallery is only an example. In this solution, any application or module that can obtain the image stored in the electronic device can perform an image recognition process. The application packages may further include a third-party application, and this is not limited herein, where the third-party application is an application installed after the user downloads an installation package from an application store (or an application market), for example, a map application, a take-out application, a reading application (for example, an E-book), a social application, and a travel application.

The application framework layer provides an application programming interface (application programming interface, API) and a programming framework for applications at the application layer. The application program framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of the display, determine whether there is a status bar, lock a screen, take a screenshot, and the like.

The content provider is used to store and obtain data, and enable the data to be accessible to an application. The data may include a video, an image, audio, calls that are made and answered, a browsing history and a bookmark, a phone book, and the like.

The view system includes visual controls, such as a control for displaying a text, a control for displaying an image, and the like. The view system may be configured to construct an application. A display interface may include one or more views. For example, a display interface including an SMS message notification icon may include a view for displaying a text and a view for displaying an image.

The telephone manager is configured to provide a communication function of the electronic device, for example, management of a call status (including answering, declining, or the like).

The resource manager provides, for an application, various resources such as a localized character string, an icon, an image, a layout file, and a video file.

The notification manager enables an application to display notification information in a status bar, and may be configured to convey a notification message. The displayed notification information may automatically disappear after a short stay and require no user interaction. For example, the notification manager is configured to provide a notification of download completion, a message prompt, and the like. The notification manager may alternatively be a notification that appears in a top status bar of the system in a form of a graph or a scroll bar text, for example, a notification of an application running on a background or a notification that appears on a screen in a form of a dialog window. For example, text information is prompted in the status bar, an alert sound is given, the mobile phone vibrates, and an indicator blinks.

The Android runtime includes a core library and a virtual machine. The Android runtime is responsible for scheduling and managing the Android system.

The core library includes two parts: a functional function that needs to be invoked in a Java language and a core library of Android.

The application layer and the application framework layer run in the virtual machine. The virtual machine executes java files at the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (media library), a three-dimensional graphics processing library (for example, OpenGL ES), a two-dimensional graphics engine (for example, SGL), and the like.

The surface manager is configured to manage a display subsystem, and provide fusion of two-dimensional and three-dimensional layers to a plurality of applications.

The media library supports playback and recording in a plurality of commonly used audio and video formats, static image files, and the like. The media library may support a plurality of audio and video encoding formats, for example, MPEG4, H.264, MP3, AAC, AMR, JPG, and PNG.

The three-dimensional graphics processing library is configured to implement three-dimensional graphics drawing, image rendering, composition, layer processing, and the like.

The two-dimensional graphics engine is a drawing engine for two-dimensional drawings.

The core layer is a layer between hardware and software. The core layer includes at least a display driver, a camera driver, an audio driver, and a sensor driver.

In an embodiment of this application, an electronic device receives a trigger operation of the user on an icon of a voice assistant, and in response to the trigger operation of the user, a display driver controls a display to display a display interface of the voice assistant.

Based on the foregoing hardware architecture and software architecture, the following uses an example in which the electronic device is a mobile phone to describe the video generation method provided in this embodiment of this application.

In a possible case of this embodiment of this application, the mobile phone receives an operation of the user triggering start of the voice assistant, and in response to the trigger operation of the user, the mobile phone starts the voice assistant. After the mobile phone receives an operation of the user triggering access to an intelligent interaction interface, in response to the trigger operation of the user, the mobile phone displays the intelligent interaction interface. The intelligent interaction interface is an interface provided by the voice assistant to interact with the user. For example, on the intelligent interaction interface, the user may manually trigger or trigger, through voice, to control the voice assistant to execute a corresponding instruction. By using a smart video creation function of the voice assistant, the user may perform video creation on the intelligent interaction interface.

In a possible case, the mobile phone receives an operation of the user controlling, on the intelligent interaction interface, the voice assistant to generate a target video corresponding to a target theme. In response to the trigger operation of the user, after finding at least one image corresponding to the target theme, the voice assistant displays the at least one image corresponding to the target theme on the intelligent interaction interface. The voice assistant receives an operation of the user triggering generation of the target video. In response to the trigger operation of the user, after generating the target video corresponding to the target theme based on the at least one image corresponding to the target theme, the voice assistant displays a thumbnail of the target video on the intelligent interaction interface.

The target theme may be any theme, and a type of the target theme is not limited in embodiments of this application. For example, the target theme may be "generate a video of a child dancing", "generate a video of a child smiling", "generate a video of a pet playing", "generate a video of a weekend trip", or the like. In this solution, an object type and a quantity of objects corresponding to the target theme are also not limited. For example, the object type for the target theme may be person, pet, place, or the like. There may be one or more objects. The at least one image corresponding to the target theme is an image recommended to the intelligent interaction interface of the voice assistant for display after the gallery performs image recognition on all images in the gallery. All the images in the gallery may be target images of interest to the user. For example, an image in the gallery may be an image captured by a camera of the mobile phone, an image received in real time or in advance by the mobile phone from another electronic device, an image downloaded in real time or in advance by the mobile phone from the network, or the like. In embodiments of this application, a manner of obtaining the image in the gallery is not limited to the foregoing obtaining manner. The manner of obtaining the image in the gallery is not limited in embodiments of this application.

There may be a plurality of manners in which the user triggers access to the intelligent interaction interface.

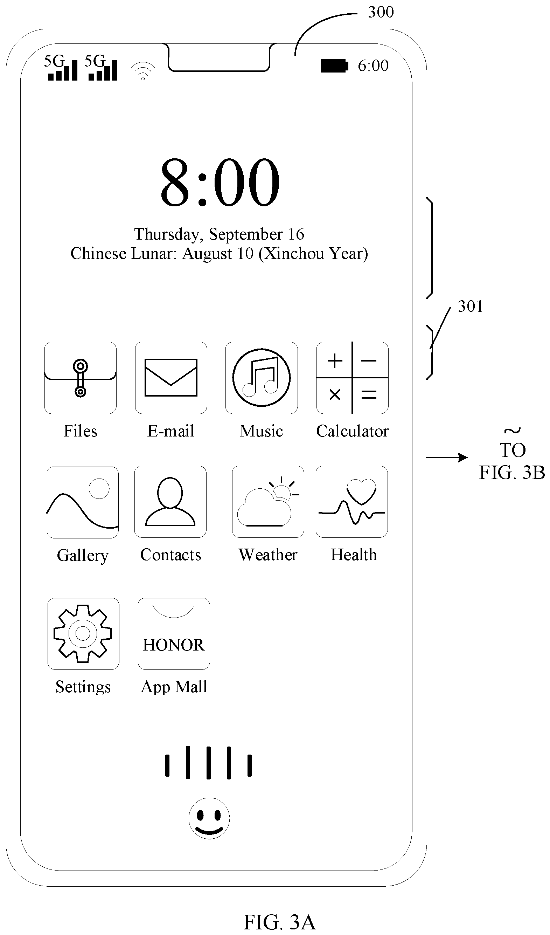

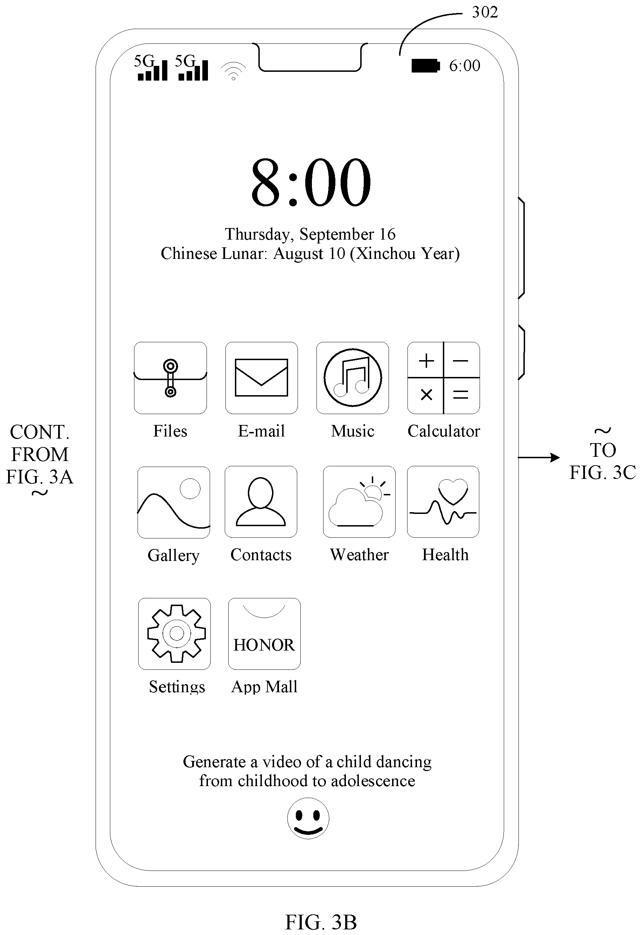

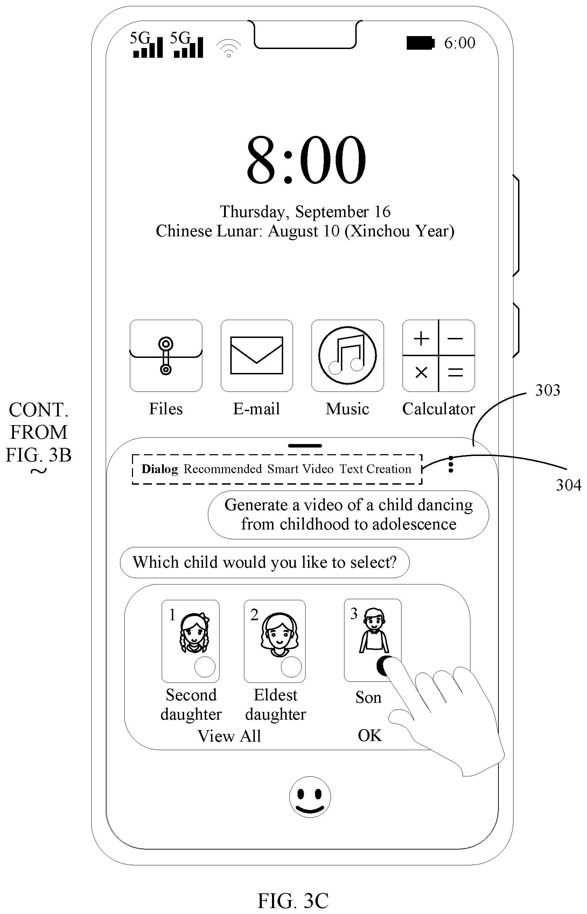

In an embodiment, after waking up the voice assistant through voice, or pressing and holding a power button, or the like, the user may trigger, through the display interface of the voice assistant, access to the intelligent interaction interface. For example, when the mobile phone displays a home screen, after receiving an operation of the user waking up the voice assistant through voice, the mobile phone displays an interface 300 shown in FIG. 3A in response to the operation of the user. For example, after receiving speech information "Xiao Y, Xiao Y", indicated by the user through voice for waking up the voice assistant, the mobile phone displays the interface 300 shown in FIG. 3A. Alternatively, after detecting an operation of the user pressing and holding a power button 301, the mobile phone displays the interface 300 shown in FIG. 3A. Then, after receiving an operation of the user indicating, through voice, "generate a video of a child dancing from childhood to adolescence", the mobile phone displays an interface 302 shown in FIG. 3B, and switches to an intelligent interaction interface 303 shown in FIG. 3C in response to the operation of the user.

It may be understood as that the voice assistant may provide a plurality of functions for the user, and these functions include a video generation function in this application. Display interfaces of different functions of the voice assistant are different. In addition, the voice assistant may provide, through a menu, an entry to a display interface of a corresponding function for the user, to trigger the mobile phone to display the interface of the corresponding function.

For example, after the user triggers the voice assistant through a voice indication, the mobile phone displays an interface of a dialog function of the voice assistant by default. The interface includes a menu (for example, an area 304 shown in FIG. 3C). The menu includes entries of functions, such as "Dialog", "Recommend", "Smart Video", and "Text Creation". After receiving an operation of the user swiping left or right or an operation indicated by the user through voice, the voice assistant may switch between interfaces corresponding to the functions for display. It should be explained that because a size of the display is limited, an entry of each function in the area 304 shown in FIG. 3C is merely used as an example, and the user may perform an operation of swiping left or right, to display an entry control of another function.

In a possible case, if the voice assistant determines that the gallery has performed person clustering on the plurality of images in the gallery, the intelligent interaction interface of the voice assistant displays at least one clustered person image. For example, images of three children are displayed on the intelligent interaction interface 303 shown in FIG. 3C.

It should be explained that the interface displayed on the mobile phone and the interfaces of the voice assistant shown in FIG. 3A, FIG. 3B, and FIG. 3C are merely used as examples for description, and a trigger operation of the user on the mobile phone is merely used as an example. This is not limited in this embodiment of this application.

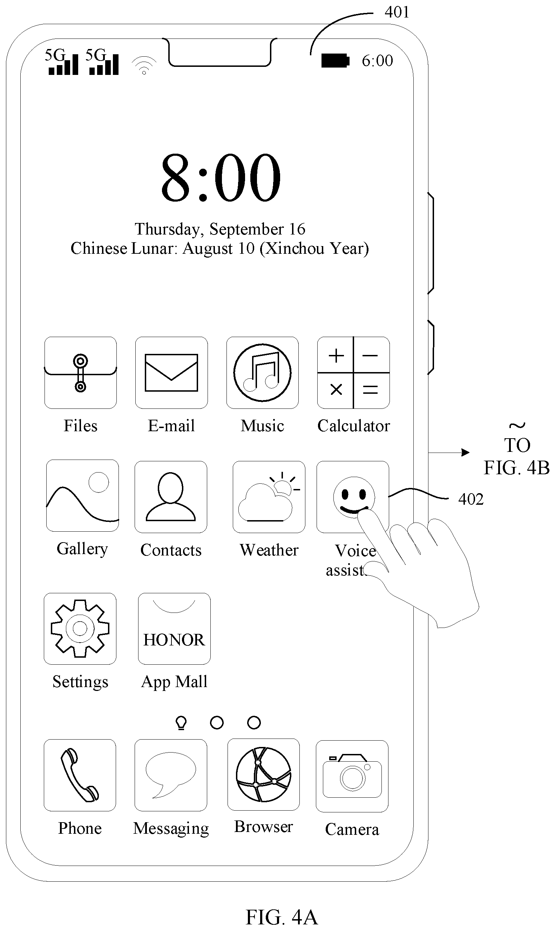

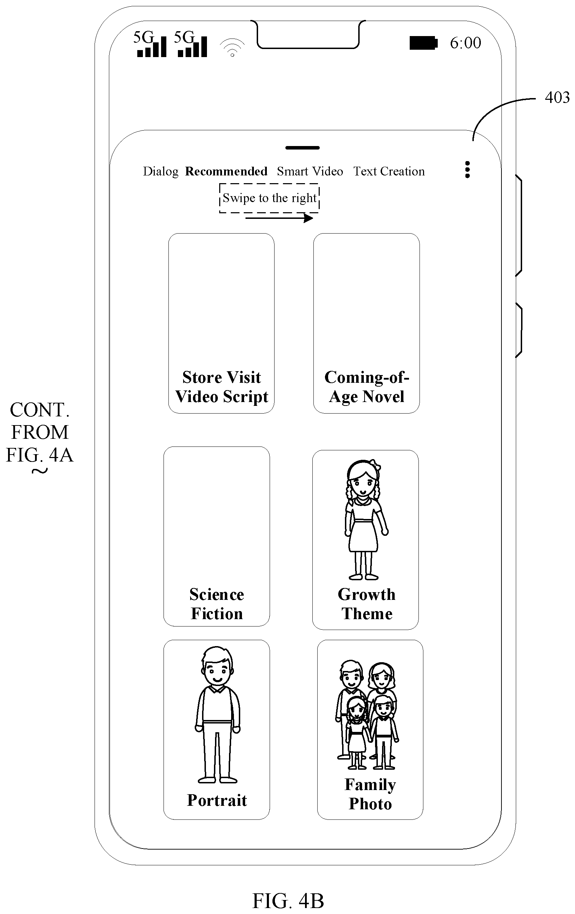

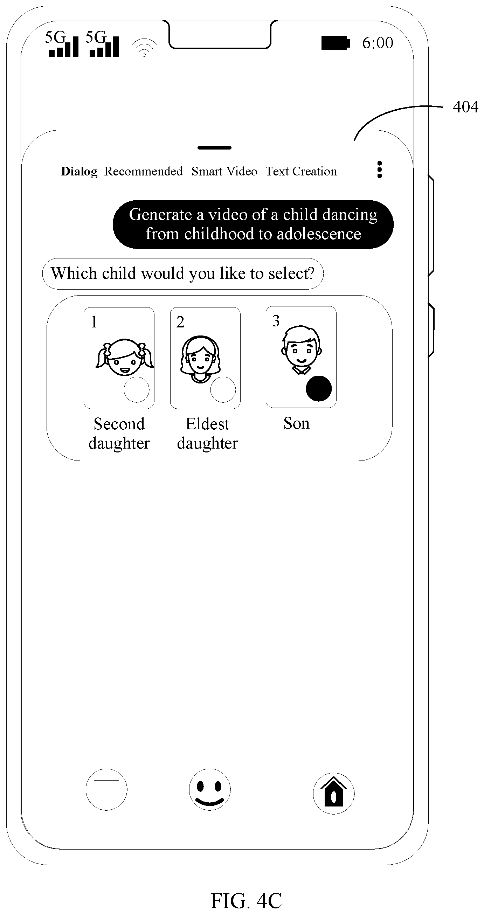

In another embodiment, after starting the voice assistant in a manner of triggering the icon of the voice assistant on a home screen of the mobile phone, the user may trigger, through the display interface of the voice assistant, to access to the intelligent interaction interface. For example, refer to FIG. 4A. The mobile phone displays a home screen 401, where the home screen 401 includes an icon 402 of the voice assistant. After receiving a trigger operation of the user on the icon 402 of the voice assistant, the mobile phone displays a recommendation interface 403 shown in FIG. 4B in response to the trigger operation of the user. After receiving an operation of the user swiping the recommendation interface 403 to the right, the mobile phone displays an intelligent interaction interface 404 shown in FIG. 4C in response to the trigger operation of the user.

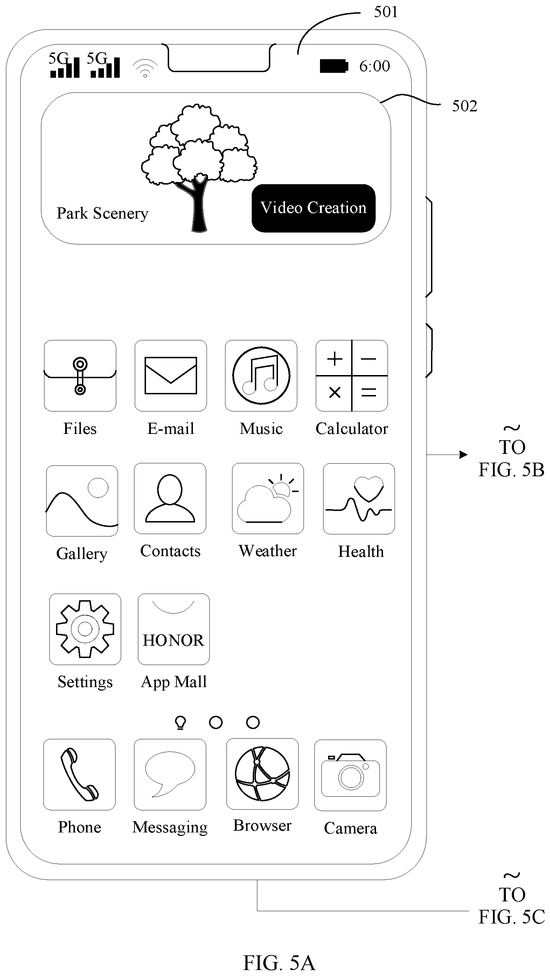

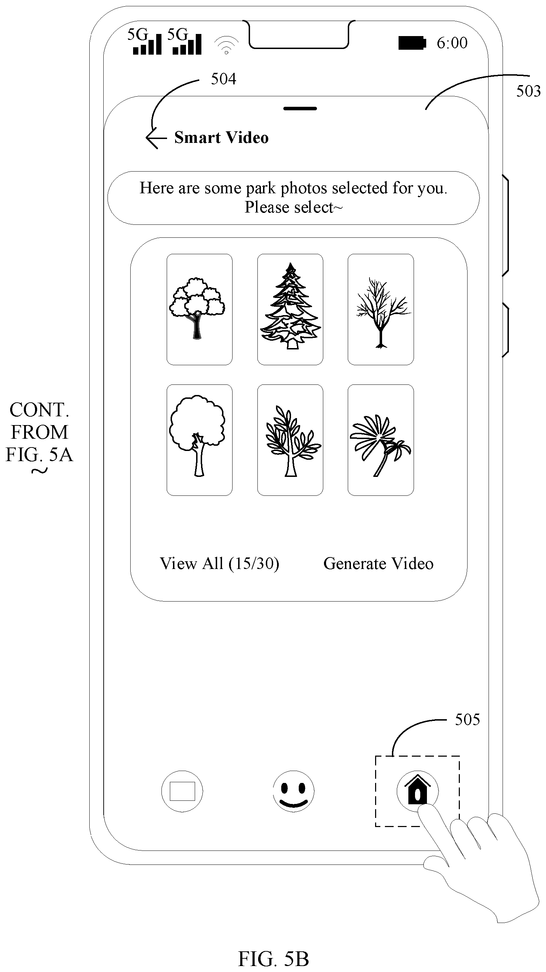

In another embodiment, the user may access to the intelligent interaction interface in a manner of triggering a home screen card. The home screen card may be generated by the voice assistant based on images in the gallery. For example, refer to FIG. 5A. In a process in which the mobile phone displays an interface 501, the mobile phone receives a trigger operation of the user on a home screen card 502 on the interface 501. If the mobile phone determines that the gallery has performed image recognition, the mobile phone displays a smart video creation interface 503 shown in FIG. 5B in response to the trigger operation of the user. The voice assistant receives an operation of the user swiping the intelligent interaction interface 503 down. In response to the trigger operation of the user, the voice assistant exits the intelligent interaction interface 503 and displays the interface 501, that is, returns from the interface shown in FIG. 5B to the interface shown in FIG. 5A. The voice assistant receives a trigger operation of the user on a control 504 or a control 505, and may display the intelligent interaction interface.

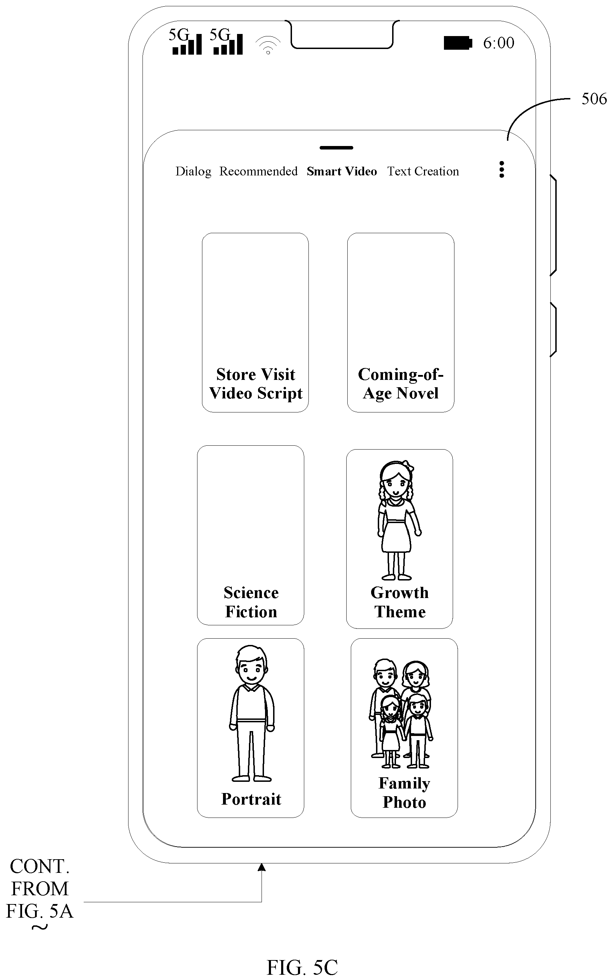

If the mobile phone determines that the home screen card 502 is triggered for the first time, the gallery does not include a material, the gallery does not perform image recognition, or the voice assistant does not recommend a candidate theme based on an image recognition result of the gallery after the gallery performs image recognition on the images, the mobile phone may display a recommendation interface of the voice assistant, that is, display an interface 506 shown in FIG. 5C. The voice assistant receives an operation of the user swiping the interface 506 to the right. In response to the swiping operation of the user, the intelligent interaction interface of the voice assistant is displayed.

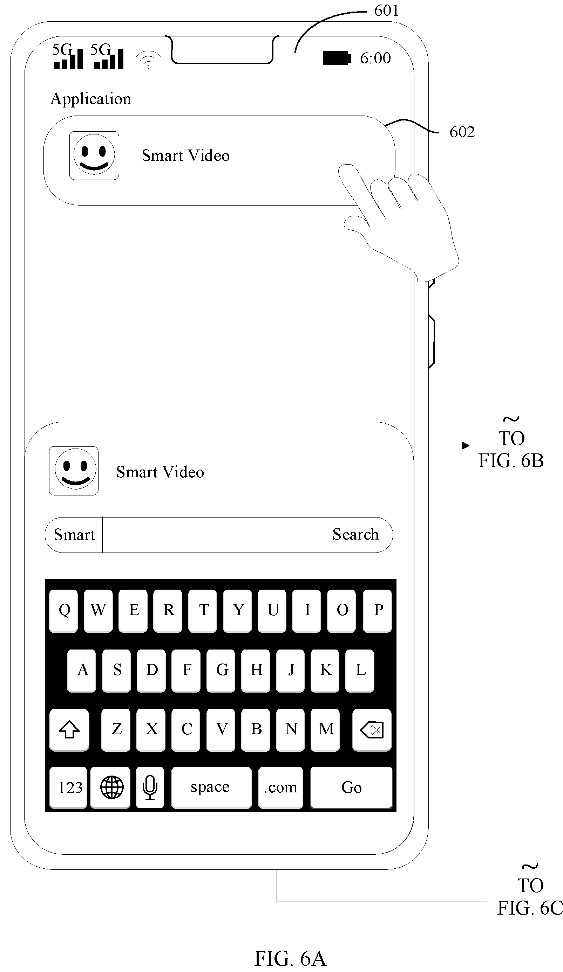

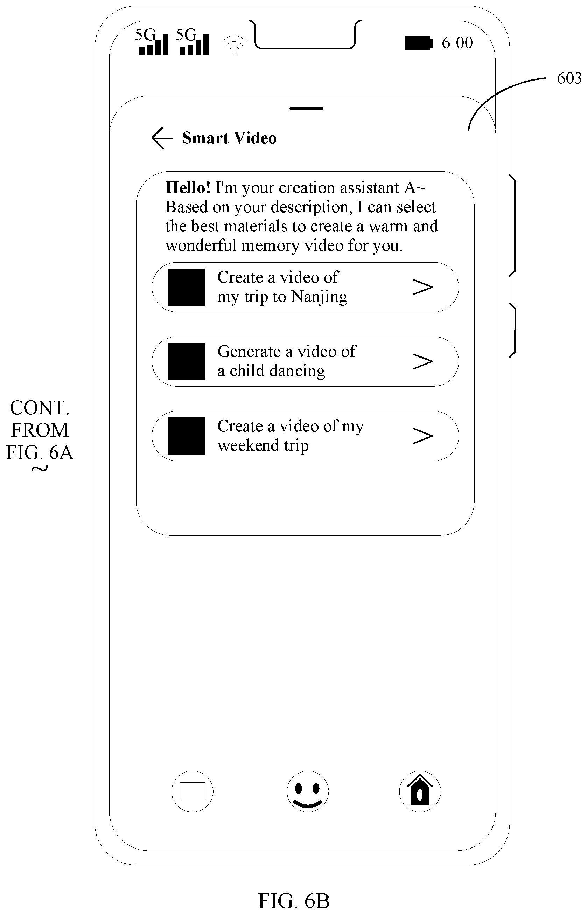

In another embodiment, the user may access to the intelligent interaction interface by searching on a HiBoard. For example, refer to FIG. 6A. In response to an input operation of the user, the mobile phone searches for smart video creation on an interface 601 and displays a smart video creation card 602 on the interface 601. The mobile phone receives a trigger operation of the user on the smart video creation card 602. In some embodiments, after the gallery performs image recognition, at least one candidate theme generated based on the image recognition result of the gallery may be displayed on the intelligent interaction interface displayed on the mobile phone. As shown in FIG. 6B, three candidate themes are displayed on an intelligent interaction interface 603.

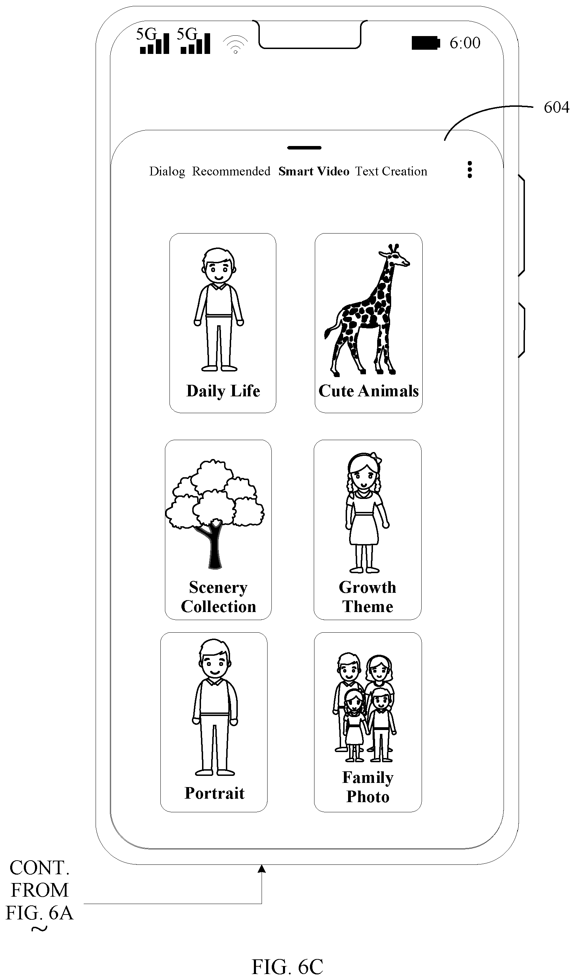

In some other embodiments, if the mobile phone determines that smart video creation is searched for on the HiBoard for the first time, the gallery does not include the material, the gallery does not perform image recognition, or the voice assistant does not recommend the candidate theme based on the image recognition result of the gallery after the gallery performs image recognition, the mobile phone may display the recommendation interface of the voice assistant, that is, display an interface 604 shown in FIG. 6C. The voice assistant receives an operation of the user swiping the interface 604 to the right. In response to the swiping operation of the user, the intelligent interaction interface of the voice assistant is displayed.

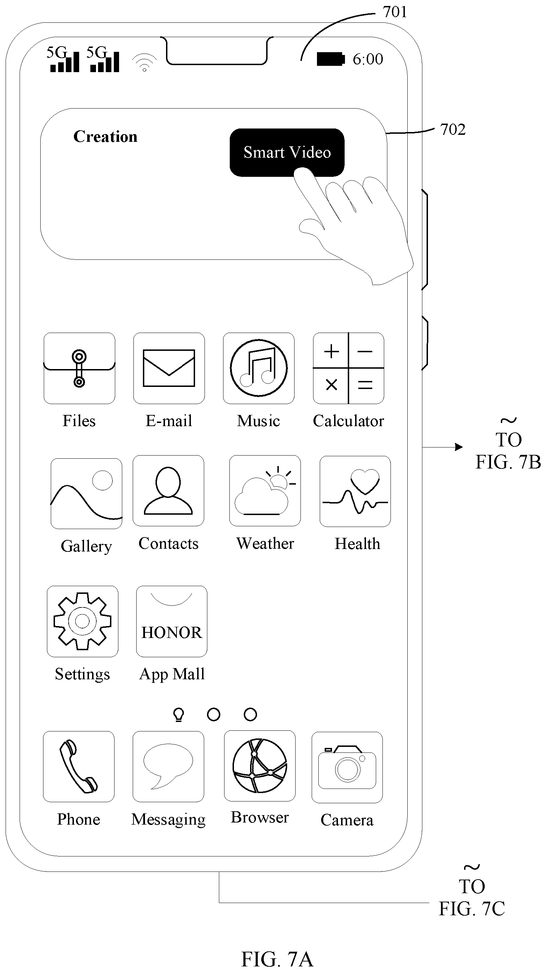

In another embodiment, the user may trigger, through a creation interface in the gallery, to access to the intelligent interaction interface. For example, refer to FIG. 7A. In a process in which the mobile phone displays a creation interface 701 of the gallery, the gallery receives a trigger operation of the user on a "Smart Video" control 702.

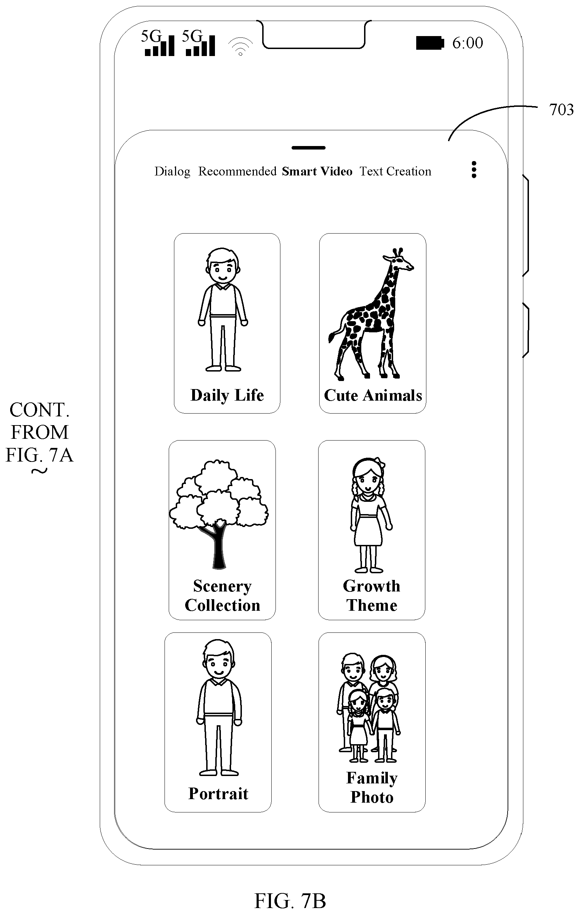

In some embodiments, if the mobile phone determines that the creation interface is triggered for the first time, the gallery does not include the material, the gallery does not perform image recognition, or the voice assistant does not recommend the candidate theme based on the image recognition result of the gallery after the gallery performs image recognition, the mobile phone may display the recommendation interface of the voice assistant, that is, display an interface 703 shown in FIG. 7B. The voice assistant receives an operation of the user swiping the interface 703 to the right. In response to the swiping operation of the user, the intelligent interaction interface of the voice assistant is displayed.

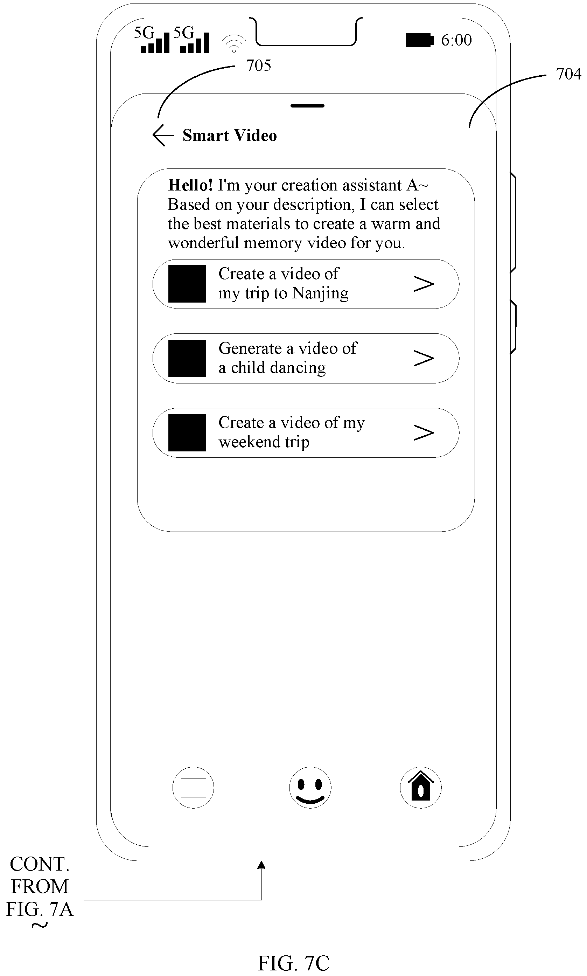

In some other embodiments, if the mobile phone determines that the gallery has performed image recognition, an interface 704 shown in FIG. 7C is displayed. The voice assistant receives a trigger operation of the user on a control 705 and displays the intelligent interaction interface of the voice assistant.

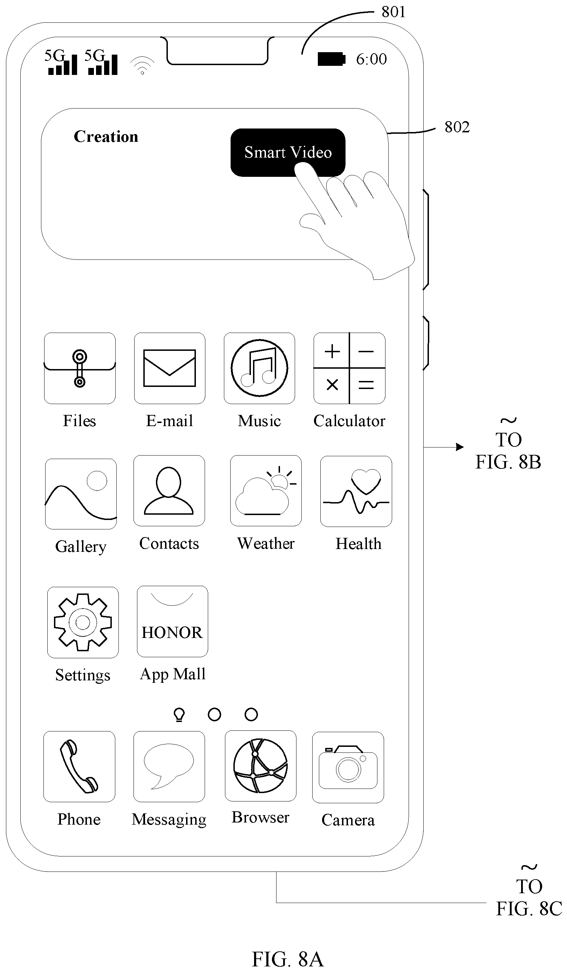

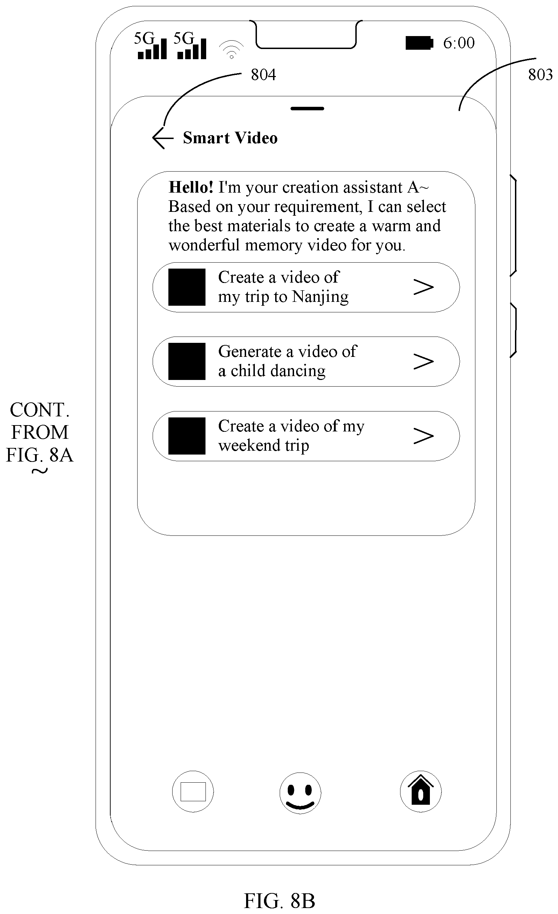

In another embodiment, the user may access to the intelligent interaction interface by triggering a gallery creation card displayed on the home screen. Because a smart video creation function entry of the voice assistant is integrated into the gallery, the gallery creation card displayed on the home screen may also include the smart video creation function entry. For example, refer to FIG. 8A. A gallery creation card 802 displayed on an interface 801 includes the smart video creation function entry. In a process in which the mobile phone displays the interface 801, the mobile phone receives a trigger operation of the user on a "Smart Video" control in the gallery creation card 802. In response to the trigger operation of the user, the mobile phone displays an intelligent interaction interface 803 shown in FIG. 8B. Similarly, the mobile phone receives an operation of the user swiping the intelligent interaction interface 803 down. In response to the trigger operation of the user, the mobile phone exits the intelligent interaction interface 803 and returns to the home screen 801, that is, returns from FIG. 8B to FIG. 8A.

If the voice assistant responds to the operation of the user triggering access to the intelligent interaction interface, the voice assistant determines that the gallery does not perform image recognition, or the voice assistant does not recommend the candidate theme based on the image recognition result of the gallery after the gallery performs image recognition, the mobile phone may display the recommendation interface of the voice assistant.

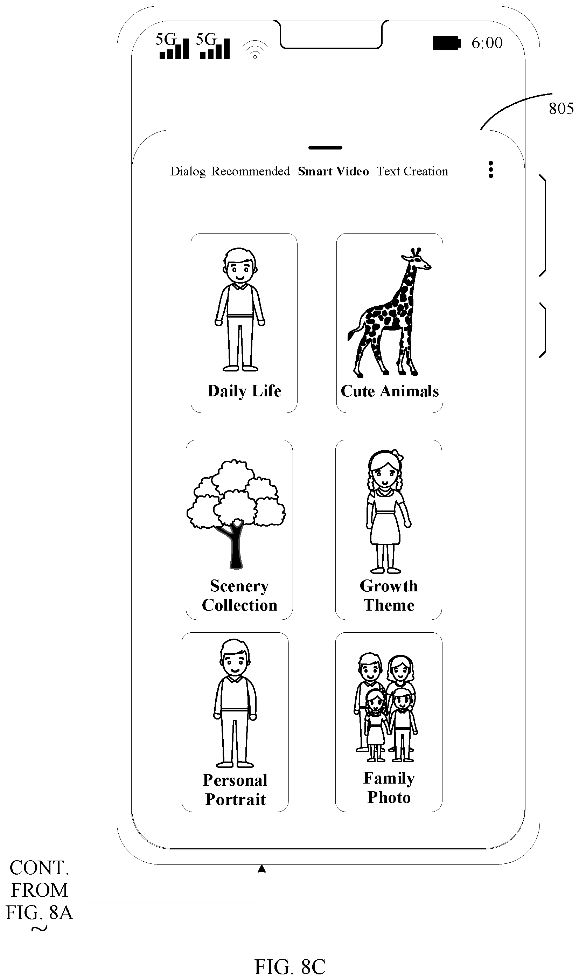

It may be understood as that after the gallery performs image recognition on the plurality of images in the gallery, the at least one candidate theme recommended by the voice assistant based on the image recognition result of the gallery may be displayed on the intelligent interaction interface displayed on the mobile phone. As shown in FIG. 8B, three candidate themes are displayed on the intelligent interaction interface 803. However, when the voice assistant does not recommend the candidate theme based on the image recognition result of the gallery, or the voice assistant determines that the gallery does not perform image recognition on the image, the mobile phone displays an interface 805 shown in FIG. 8C.

The following describes a video generation process in this embodiment of this application in detail by using an example in which the user triggers to access to the intelligent interaction interface after waking up the voice assistant through voice indication.

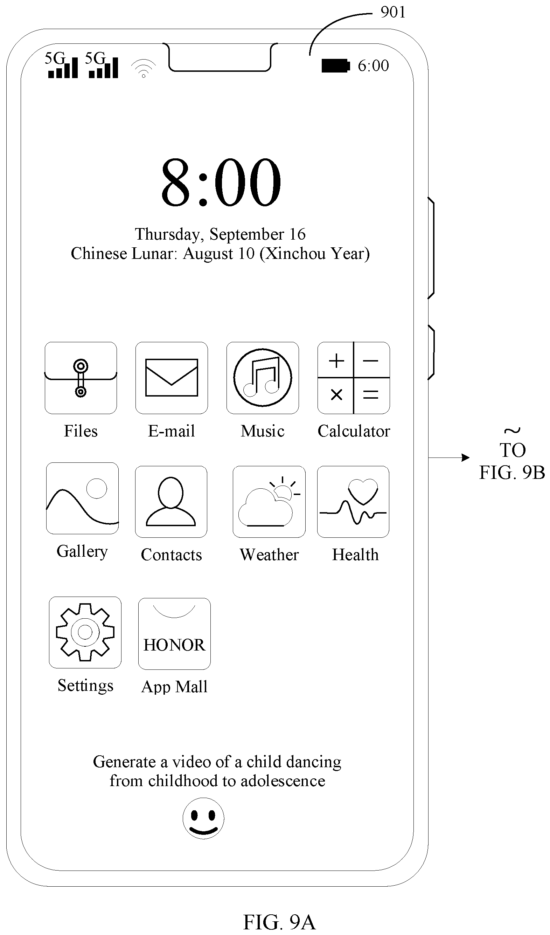

For example, in a process in which the mobile phone displays any interface, after receiving the operation of the user pressing and holding the power button, the mobile phone starts the voice assistant in response to the operation of the user. After receiving an operation of the user indicating, through voice, to generate a target video corresponding to a target theme (for example, the target theme is "generate a video of a child dancing from childhood to adolescence"), the mobile phone displays an interface 901 shown in FIG. 9A. There may be one or more objects corresponding to the target theme, and the object corresponding to the target theme is generated by the voice assistant based on a result of clustering performed by the gallery on the images in the gallery.

After the mobile phone receives first speech information indicated by the user through voice, the mobile phone may perform semantic analysis on the first speech information, to determine the target theme based on a semantic analysis result. In one case, when the mobile phone does not recognize semantics corresponding to the first speech information, prompt information is displayed on the interface of the voice assistant to inform the user that the target theme is not identified, and the user may provide indication again. For example, the prompt information may be "Sorry, I don't know what video to generate. Please say it again".

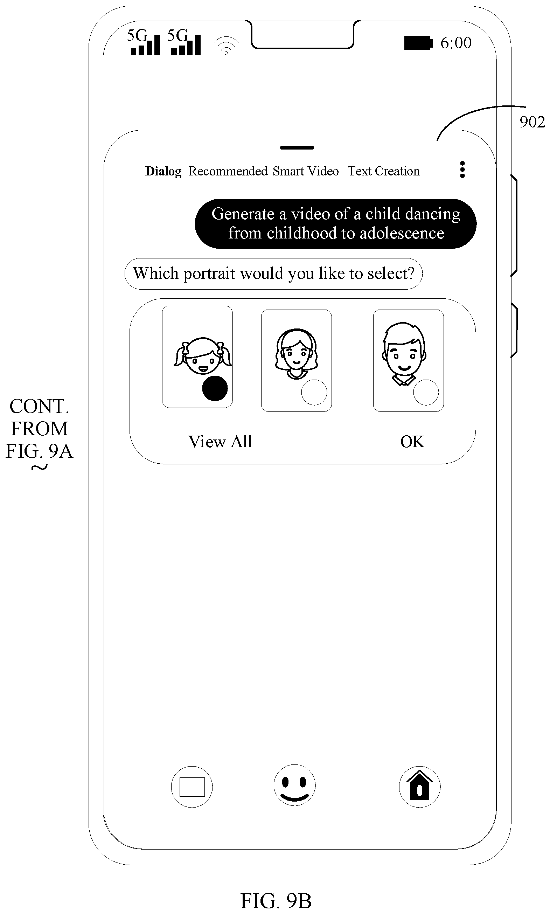

In one case, in a case in which a plurality of objects obtained through clustering in the gallery are not marked, when there is one object corresponding to the target theme, the voice assistant displays an intelligent interaction interface 902 shown in FIG. 9B in response to an operation of the user. The intelligent interaction interface 902 displays one object corresponding to the target theme and another object obtained through clustering in the gallery.

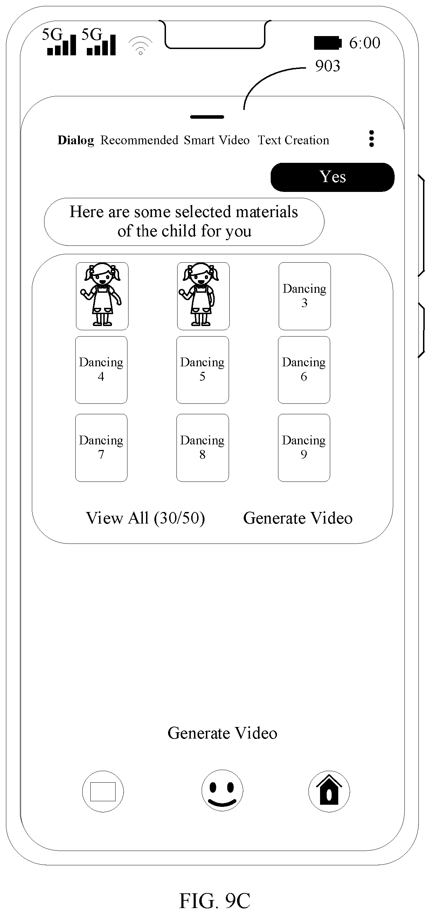

The voice assistant receives an operation of the user indicating, through voice, to confirm a portrait of a child (a target object). In response to the operation (a first operation) of the user, an intelligent interaction interface 903 shown in FIG. 9C is displayed. The intelligent interaction interface 903 includes materials corresponding to the target theme found by the voice assistant. Herein, the material corresponding to the target theme found by the voice assistant may be an image material or may be a video material. This is determined based on the actually found material and is not limited herein.

In another case, in a case in which a plurality of objects obtained through clustering in the gallery are marked, when there is one object corresponding to the target theme, the voice assistant directly displays an intelligent interaction interface 903 shown in FIG. 9C in response to the operation of the user. That is, in response to the operation of the user, the voice assistant directly finds materials corresponding to an object marked as "second daughter".

In a process in which the voice assistant searches for the materials corresponding to the target theme, prompt information may be displayed on the intelligent interaction interface, to inform that the materials corresponding to the target theme are being searched for. Therefore, this avoids a problem that in the process of searching for the materials, the interface of the voice assistant does not change, causing the user to think that the voice assistant is stuck.

It should be explained that, because the size of the display is limited, when there are a large quantity of materials found by the voice assistant, the intelligent interaction interface may only display some materials. As shown in FIG. 9C, there are 30 materials, corresponding to the target theme, found by the voice assistant, and nine materials are displayed on the intelligent interaction interface 903. The voice assistant receives a trigger operation of the user on a "View All" control. In response to the trigger operation of the user, all materials may be displayed on the intelligent interaction interface.

A plurality of materials, corresponding to the target theme, displayed on the intelligent interaction interface 903 shown in FIG. 9C may be sequenced based on time identifiers of the materials, or may be random. This is not limited herein. A time identifier of a material may indicate a time when the mobile phone photographs the material, or may indicate a time when the mobile phone stores the material for the last time. This is not limited herein either. In addition, a quantity of materials displayed on the intelligent interaction interface of the voice assistant may be preset. For example, nine materials may be set to be displayed. Further, a total count threshold of the materials that can be found by the voice assistant may also be preset. For example, the total count threshold of the materials may be set to 50. Therefore, this avoids that, in a scenario in which the voice assistant finds a large quantity of materials, the voice assistant obtains a large quantity of materials from the gallery, causing the voice assistant to be stuck.

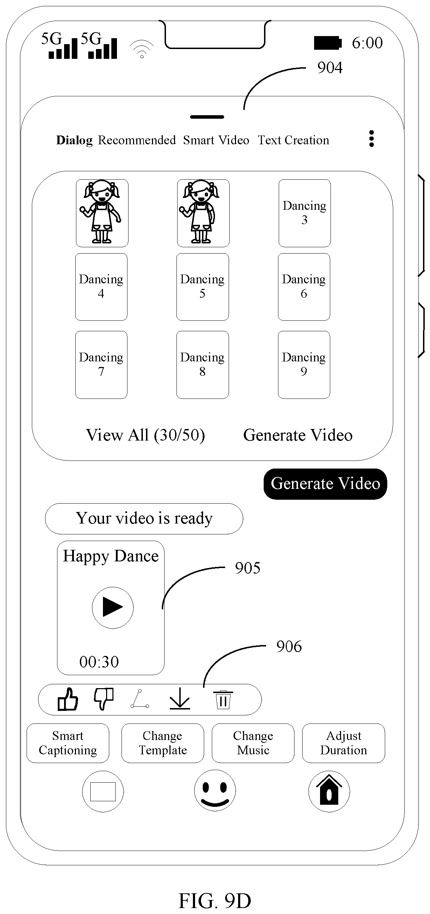

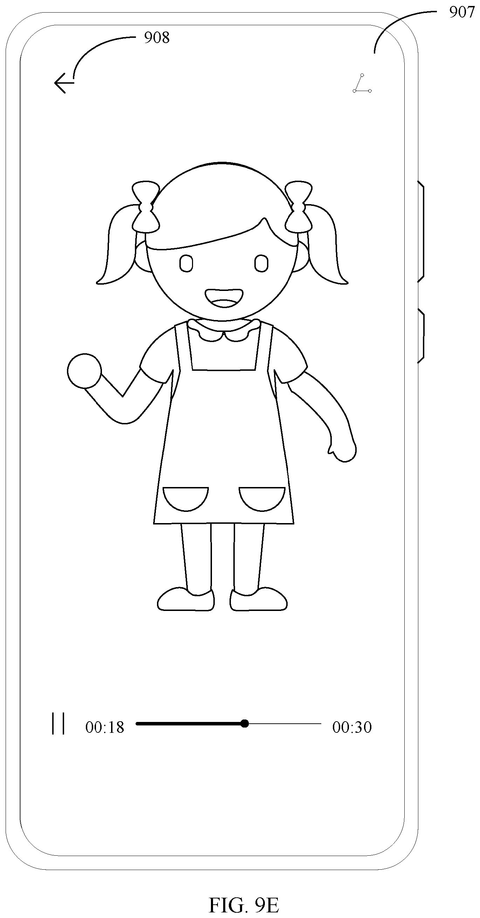

In one case, when the voice assistant receives an operation (a third operation) of the user indicating, through voice, "generate a video", in response to the operation of the user, the voice assistant generates the target video based on the materials (the first material) corresponding to the target theme and displays a thumbnail of the target video on the intelligent interaction interface. For example, a thumbnail 905 of the target video is display on an intelligent interaction interface 904 shown in FIG. 9D. The voice assistant receives an operation of the user indicating to play the video and displays a playback interface 907 shown in FIG. 9E in response to the operation of the user. The voice assistant receives an operation of the user on a "Return" control 908 and returns to the intelligent interaction interface 904 shown in FIG. 9D in response to the operation of the user.

In another case, when the voice assistant receives the operation of the user indicating, through voice, "generate a video", in response to the operation of the user, the voice assistant determines that all materials corresponding to the target theme have been deleted from the gallery. In this case, the voice assistant cannot generate the target video corresponding to the target theme and displays prompt information on the intelligent interaction interface to inform the user that the material corresponding to the target theme is not locally stored, and the video cannot be generated.

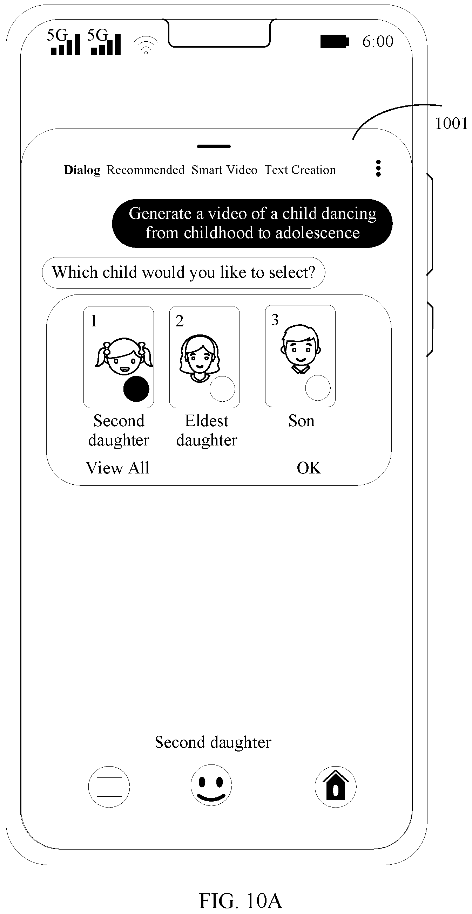

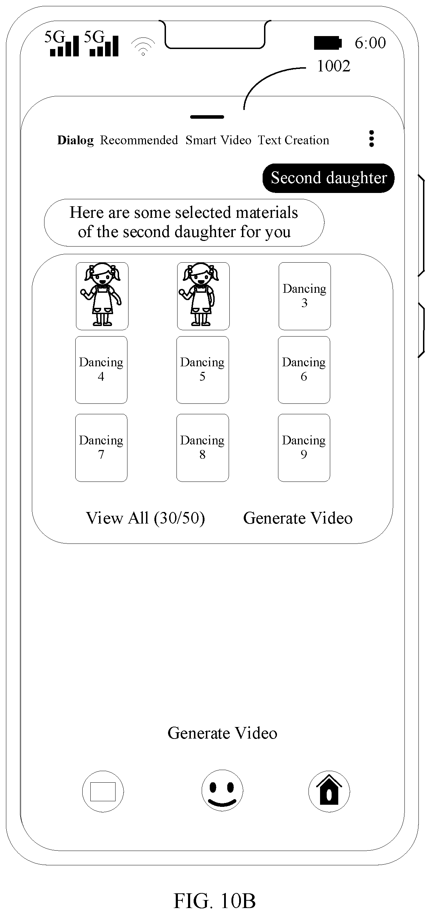

When there are a plurality of objects corresponding to the target theme, the plurality of objects are all marked, for example, the plurality of objects are all named, and the voice assistant displays an intelligent interaction interface 1001 shown in FIG. 10A in response to the operation of the user. The intelligent interaction interface 1001 displays the plurality of objects corresponding to the target theme. The voice assistant receives an operation of the user indicating, through voice, a portrait of the second daughter (the target object) and displays an intelligent interaction interface 1002 shown in FIG. 10B in response to the operation (the second operation) of the user. The intelligent interaction interface 1002 includes the materials (the first material), corresponding to the target object, found by the voice assistant. Then, for an implementation process in which the voice assistant generates the target video based on the found materials corresponding to the target object, refer to the foregoing description process of FIG. 9A, FIG. 9B, FIG. 9C, FIG. 9D, and FIG. 9E. Details are not described herein again.

In some embodiments, after receiving an operation of the user indicating, through voice, to select the target object, the voice assistant performs semantic recognition on speech information of the user and does not identify the target object. Prompt information (third prompt information) may be displayed on the interface of the voice assistant to inform the user to provide indication again. In another embodiment, the voice assistant receives the second operation of the user and finds no material corresponding to the target object in response to the second operation. Prompt information may be displayed on the interface of the voice assistant to inform the user to select another object.

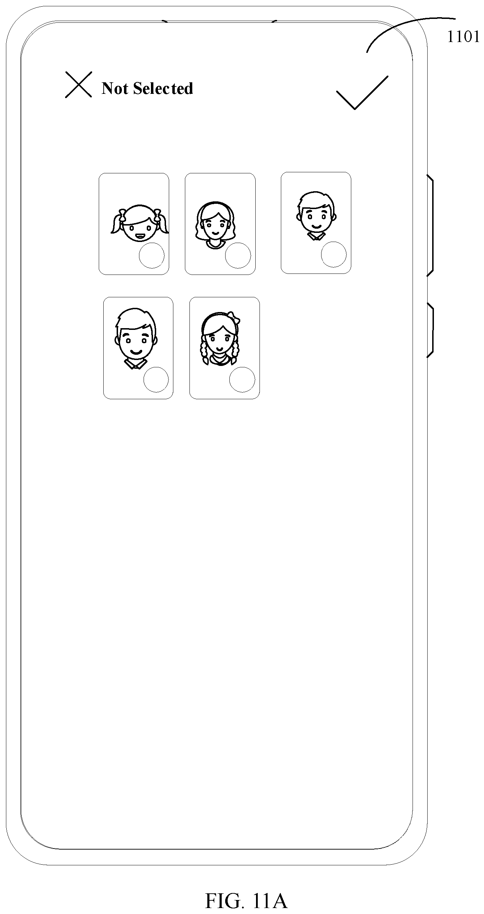

It is assumed that an object determined by the voice assistant based on a portrait clustering result of the gallery further includes another child, for example, the eldest daughter and the son. For example, the object determined by the voice assistant based on the portrait clustering result of the gallery includes five children. Portrait cards of three children may be displayed in FIG. 10A. The voice assistant receives a trigger operation of the user on a "View All" control, and may display portrait cards of all children on an interface 1101 shown in FIG. 11A in response to the operation of the user. The voice assistant receives a selection operation of the user on a portrait card in the interface 1101 and displays the portrait card selected by the user on the intelligent interaction interface in response to the operation of the user.

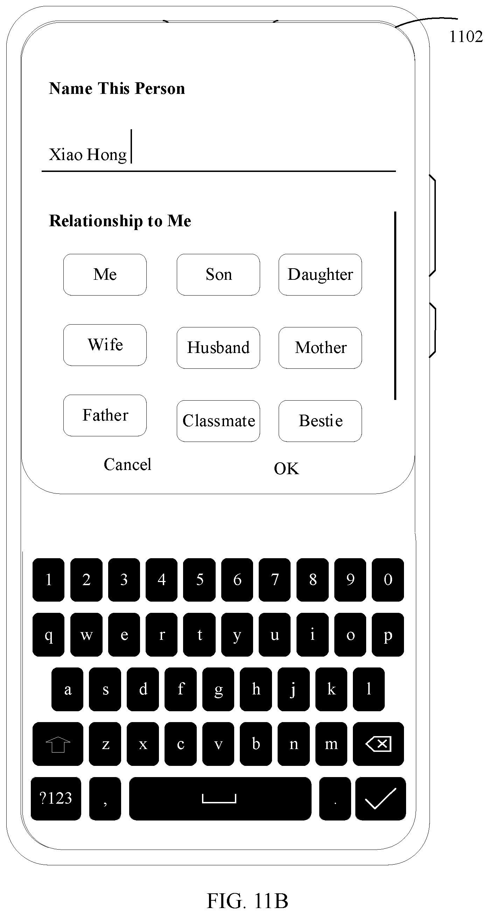

In addition, the voice assistant may further edit a name of the portrait card in response to an operation (a sixth operation) of the user, where the editing includes name addition, name modification, name deletion, or the like. For example, it is assumed that the voice assistant receives a trigger operation of the user on text "Second Daughter" shown in FIG. 10A. In response to the operation of the user, an interface 1102 shown in FIG. 11B is displayed. The voice assistant may modify the name of the portrait card on the interface 1102 in response to an operation of the user.

It may be understood as that when a plurality of objects respectively correspond to different names, the voice assistant may accurately find materials of objects of different names based on an object corresponding to a target theme indicated by the user, to improve video generation efficiency.

In addition, a plurality of portrait cards may correspond to different sequence numbers. In this way, the user may indicate, through voice, to generate a video corresponding to a sequence number. For example, in a process of displaying the intelligent interaction interface 1001 shown in FIG. 10A, after the voice assistant receives an operation of the user indicating "second child" through voice, the voice assistant searches for materials corresponding to the second child (that is, the eldest daughter) in response to the operation of the user.

After receiving the "second child" (second speech information) indicated by the user through voice, the voice assistant performs semantic analysis on the second speech information. If semantics corresponding to the second speech information is not recognized, prompt information is displayed on the intelligent interaction interface to inform the user to provide indication again.

In this embodiment of this application, after the voice assistant finds the materials (the first material) corresponding to the target theme, the voice assistant may perform processing such as addition, replacement, sequence reordering, and deletion on the materials corresponding to the target theme in response to a trigger operation (the fourth operation) of the user. Therefore, a video generated based on the materials processed by the voice assistant better meets a requirement of the user.

It should be noted that, if a speech message of the user received by the voice assistant indicates a quantity based on which material processing is to be performed on the first material, the material processing is performed based on the indicated quantity. If a message of the user received by the voice assistant does not indicate a quantity based on which material processing is to be performed on the first material, the material processing is performed on the first material based on a preset quantity. The preset quantity is less than a quantity threshold. When speech or text semantics corresponding to the message indicated by the user does not indicate the quantity based on which the material processing is to be performed on the first material, the preset quantity is a quantity for a level corresponding to the speech or text semantics. Different levels correspond to different quantities. For example, if the speech message of the user is "add a large quantity of materials of a child dancing", the preset quantity may be 50% of the first material; or if the speech message of the user is "add a small quantity of materials of a child dancing", the preset quantity may be 30% of the first material.

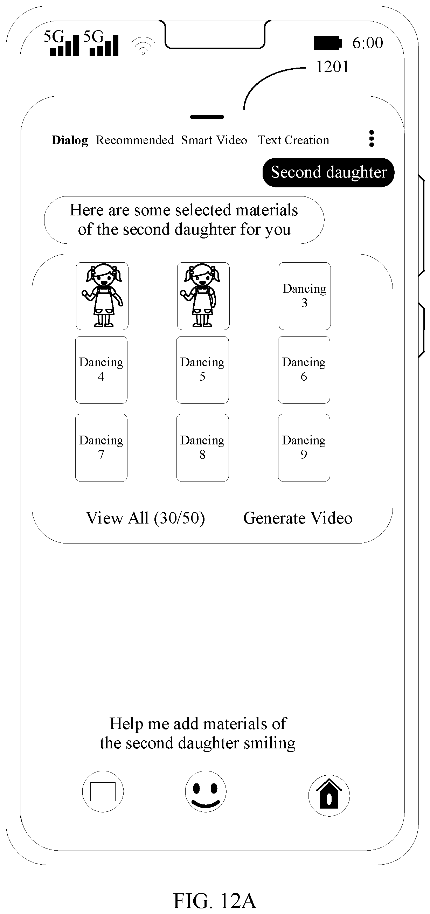

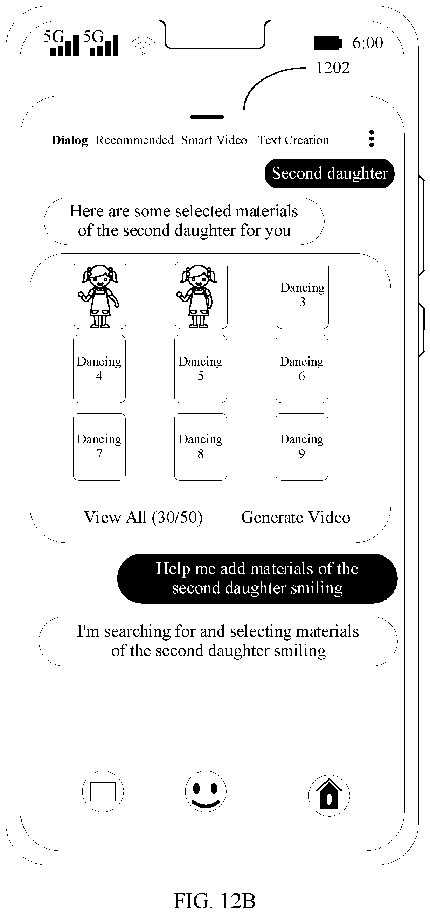

In some embodiments, the voice assistant may add a material based on the materials corresponding to the target theme in response to a voice indication operation of the user, to generate a target video with richer content. For example, a material 1 (the first material) of the second daughter dancing is displayed on an intelligent interaction interface 1201 shown in FIG. 12A. The voice assistant receives an operation of the user indicating, through voice, "help me add materials of the second daughter smiling". In response to the operation (the fourth operation) of the user, the voice assistant displays an intelligent interaction interface 1202 shown in FIG. 12B. The intelligent interaction interface 1202 displays prompt information to inform the user that the voice assistant is searching for the materials of the second daughter smiling.

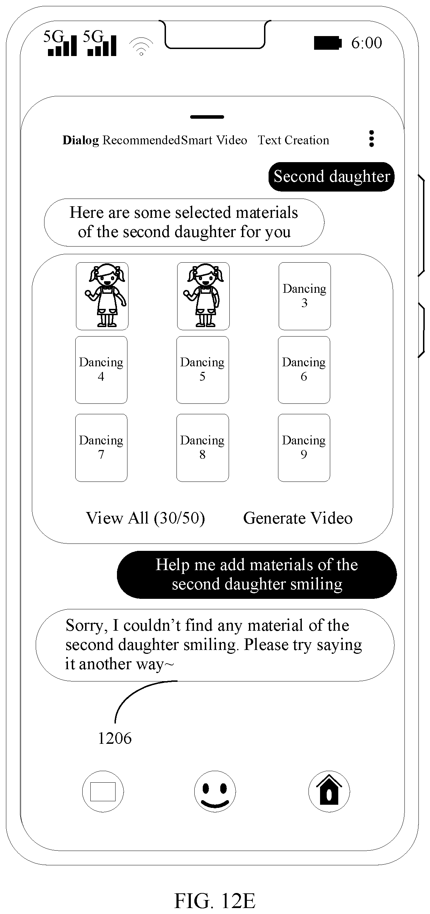

In an embodiment, the voice assistant finds no material (the second material) of the second daughter smiling, and prompt information is displayed on an intelligent interaction interface shown in FIG. 12E to inform that a video of the second daughter smiling is not found.

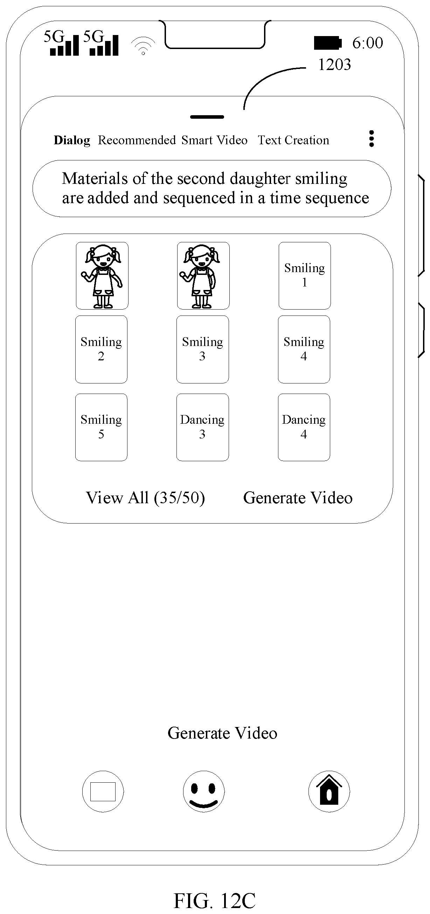

In another embodiment, after the voice assistant finds the materials (the second material) of the second daughter smiling, the voice assistant displays, on the intelligent interaction interface, for example, an intelligent interaction interface 1203 shown in FIG. 12C, a material 2 (total materials) obtained by adding the materials of second daughter smiling.

Compared with a quantity of materials displayed in FIG. 12B, a quantity of materials in the intelligent interaction interface 1203 shown in FIG. 12C is increased by five. That is, the voice assistant finds five materials of the second daughter smiling, and adds the materials to the materials corresponding to the target theme. In addition, the materials displayed on the intelligent interaction interface 1203 may be sequenced based on a time identifier of each material, the newly added materials may be sequenced to appear first, or the newly added materials may be sequenced to appear last, or the newly added materials and the original materials may be randomly sequenced together. A sequence manner of the materials displayed on the intelligent interaction interface is not limited herein.

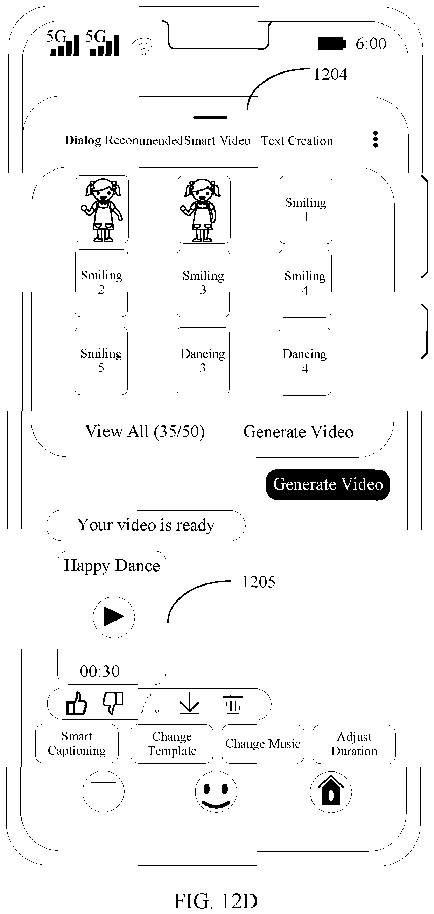

In a process of displaying the intelligent interaction interface 1203 shown in FIG. 12C, the voice assistant receives the operation of the user indicating, through voice, "generate a video". In response to the operation of the user, the voice assistant generates the target video based on the material 2 after addition and displays a thumbnail of the target video on the intelligent interaction interface. For example, a thumbnail 1205 of the target video is displayed on an intelligent interaction interface 1204 shown in FIG. 12D.

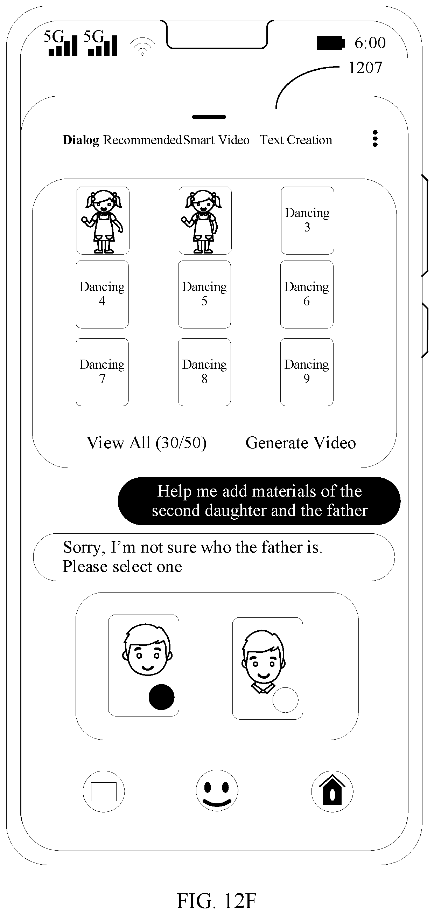

In some embodiments, the voice assistant receives an operation of the user indicating, through voice, "help me add materials of the second daughter and the father". In response to the operation (the fourth operation) of the user, the voice assistant displays an intelligent interaction interface 1207 shown in FIG. 12F. The intelligent interaction interface 1207 displays two portraits. The voice assistant receives a selection operation of the user on a 1 ^{st} portrait. In response to the operation of the user, the voice assistant searches for the materials of the second daughter and the father.

It should be noted that, in a process of displaying the materials corresponding to the target theme on the intelligent interaction interface, the voice assistant may receive, for a plurality of times, an operation of the user indicating, through voice, material addition, and add a corresponding material in response to each voice indication operation of the user.

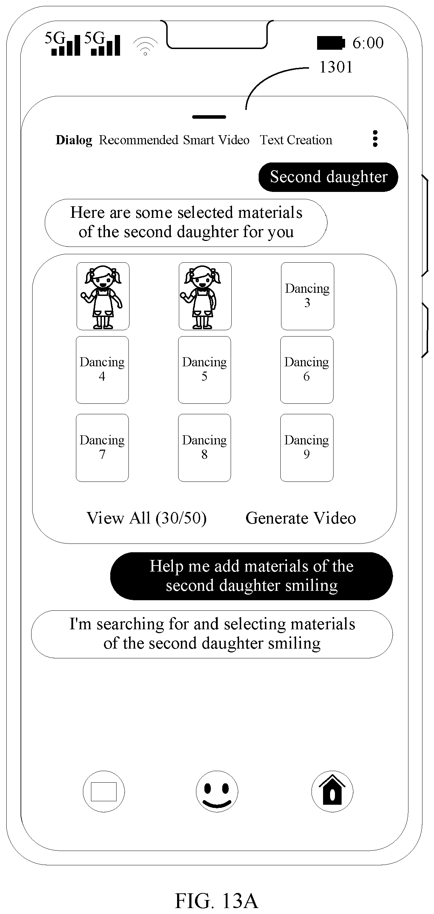

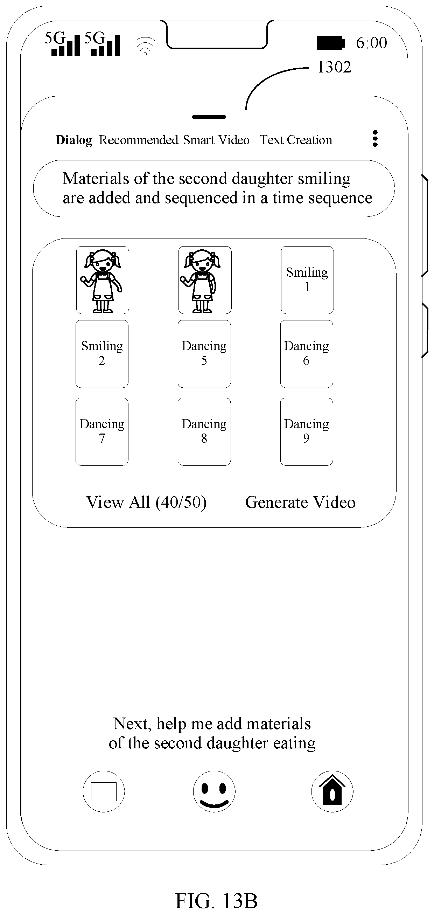

For example, an intelligent interaction interface 1301 shown in FIG. 13A displays prompt information to inform that the voice assistant is searching for the materials of the second daughter smiling. After the voice assistant finds the materials of the second daughter smiling, the voice assistant directly adds the materials of the second daughter smiling to the original materials. A material 3 obtained by adding the materials of the second daughter smiling is displayed on an intelligent interaction interface 1302 shown in FIG. 13B. It can be learned that the quantity of materials is increased from 30 materials shown in FIG. 13A to 40 materials shown in FIG. 13B. That is, the voice assistant finds 10 materials of the second daughter smiling.

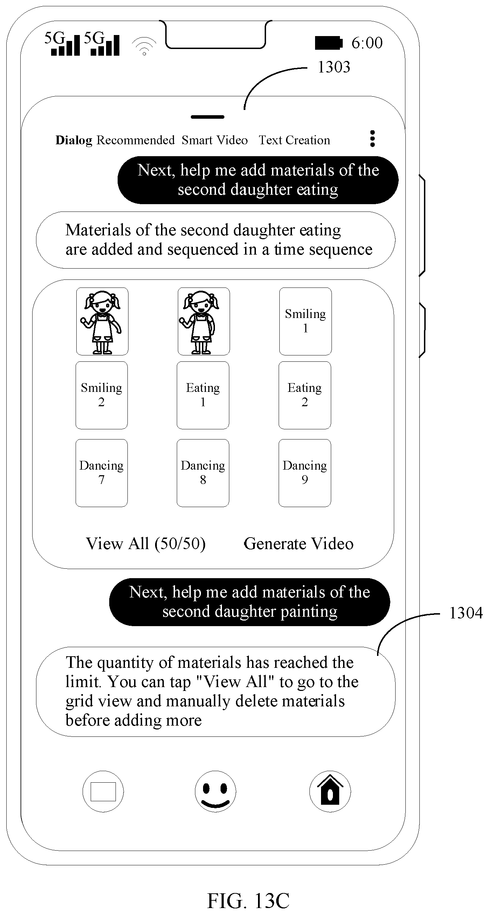

Then, the voice assistant again receives an operation of the user indicating, through voice, material addition. In response to the operation of the user, the voice assistant searches for the corresponding materials. After the intelligent interaction interface 1302 shown in FIG. 13B is displayed, the voice assistant receives an operation of the user indicating, through voice, "next, help me add materials of the second daughter eating". In response to the voice indication operation of the user, after the voice assistant finds the corresponding materials, the voice assistant displays an intelligent interaction interface 1303 shown in FIG. 13C. Materials obtained by adding the materials of the second daughter eating are displayed on the intelligent interaction interface 1303, and materials, found by the voice assistant, about the second daughter reaches the total count threshold. That is, a total count of materials found by the voice assistant is 50.

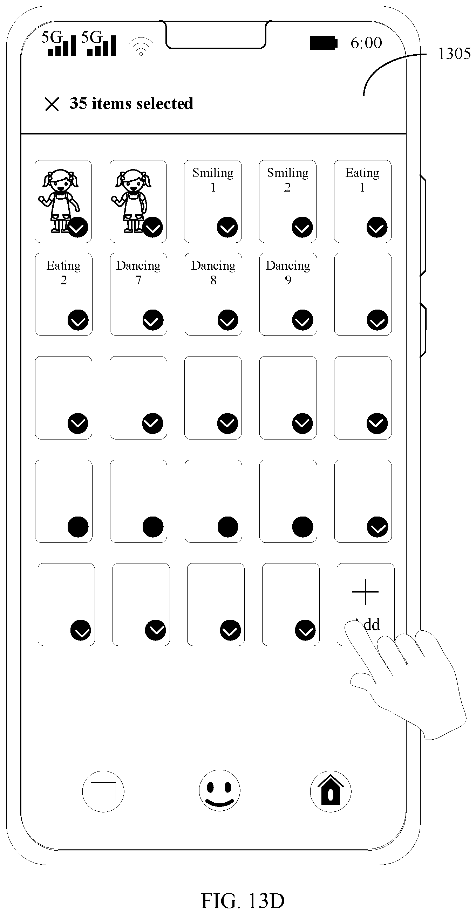

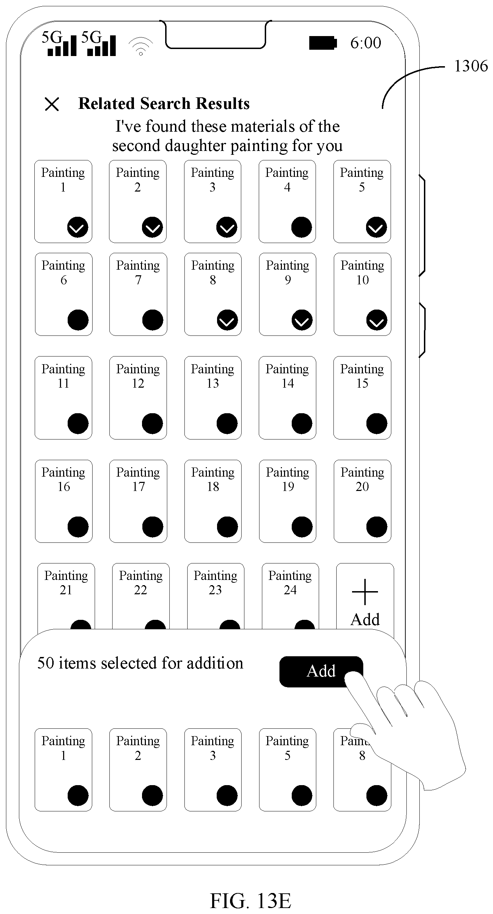

Then, the voice assistant again receives an operation of the user indicating, through voice, "next, help me add materials of the second daughter painting". In response to the indication operation of the user, prompt information 1304 (first prompt information) is displayed on the intelligent interaction interface 1303 of the voice assistant to inform the user that a quantity of materials reaches an upper limit, and material addition can continue only after some materials are deleted. For example, the voice assistant receives a trigger operation of the user on a "View All" control in the intelligent interaction interface 1303, and displays an interface 1305 shown in FIG. 13D in response to the trigger operation of the user. The voice assistant receives a selection operation of the user on a material in the interface 1305 and selects the corresponding material in response to the operation of the user. An unselected material on the interface 1305 is a to-be-replaced material. The voice assistant receives a trigger operation of the user on an "Add" control in the intelligent interaction interface 1305 and displays an interface 1306 shown in FIG. 13E in response to the trigger operation of the user. The voice assistant receives a selection operation of the user on a material in the interface 1306 and selects the corresponding material in response to the operation of the user. The voice assistant receives a trigger operation of the user on an "Add" control in the intelligent interaction interface 1306 and replaces the unselected material in the interface 1305 with the selected material in interface 1306.

That is, when the voice assistant determines that the total count of materials reaches the total count threshold, after the voice assistant receives an indication operation of the user triggering material addition, in response to the trigger operation of the user, prompt information may be displayed on the intelligent interaction interface of the voice assistant to inform the user to replace an original material in the interface with a newly found material.

In some embodiments, after the voice assistant receives an operation of the user indicating, through voice, material addition, the voice assistant may determine a quantity of added materials based on semantics corresponding to a speech message of the user. In some embodiments, when speech of the user received by the voice assistant explicitly indicates a quantity of materials to be added, the voice assistant adds the materials based on the indicated quantity. For example, a speech message indicated by the user through voice is "add five eating materials", and the voice assistant determines that five materials are added this time. In some other embodiments, when the speech message of the user received by the voice assistant does not indicate the quantity of materials to be added, a preset quantity of materials are added. For example, a speech message, received by the voice assistant, of the user indicating, through voice, material addition is "add a small quantity/a small part/a little bit of materials", and the voice assistant determines that an upper limit value of materials to be added is a material quantity 1 (for example, the material quantity 1 is 9, 10, or the like). For another example, a speech message, received by the voice assistant, of the user indicating, through voice, material addition is "add a large quantity/a large part/many materials", and the voice assistant determines that the upper limit value of materials to be added is a material quantity 2 (for example, the material quantity 2 is 15 or the like).

It should be explained that when the voice assistant adds a material for a plurality of times in response to an indication operation of the user, a quantity of materials added by the voice assistant each time is less than the preset quantity, so that a quantity of materials after addition is not greater than the total count threshold. In the foregoing example, a manner in which the voice assistant adds the material is merely an example. In an actual application process, the voice assistant may determine a quantity of times of material addition based on an actually received quantity of times of material addition indicated by the user, and determine the quantity of materials to be added based on a quantity of actually found materials.

In some other embodiments, the voice assistant receives an operation of the user indicating, through voice, to replace the materials corresponding to the target theme, and replaces some materials corresponding to the target theme with other materials in response to the voice indication operation of the user, to generate the target video based on materials after replacement (a sixth material). When a speech message, received by the voice assistant, of the user indicating, through voice, material replacement does not explicitly indicate a quantity of materials to be replaced, the voice assistant may determine the quantity of materials to be replaced based on semantics corresponding to the speech message. For example, the speech message received by the voice assistant is "replace a small quantity/a small part/a little bit of materials", and the voice assistant determines that an upper limit value of materials to be replaced is a material quantity 3 (for example, the material quantity 3 is 30% of an original material quantity). For another example, a speech message, received by the voice assistant, of the user indicating, through voice, material replacement is "replace a large quantity/a large part/many materials", and the voice assistant determines that the upper limit value of materials to be replaced is a material quantity 4 (for example, the material quantity 4 is 50% of the original material quantity).

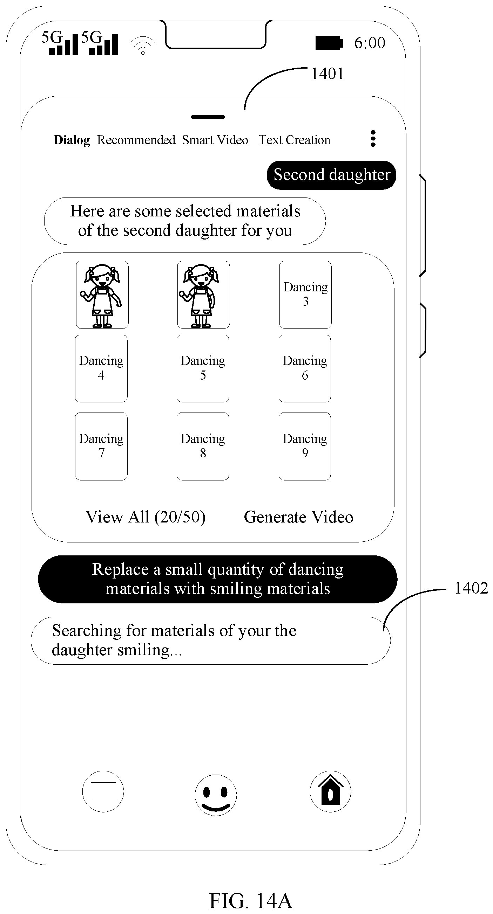

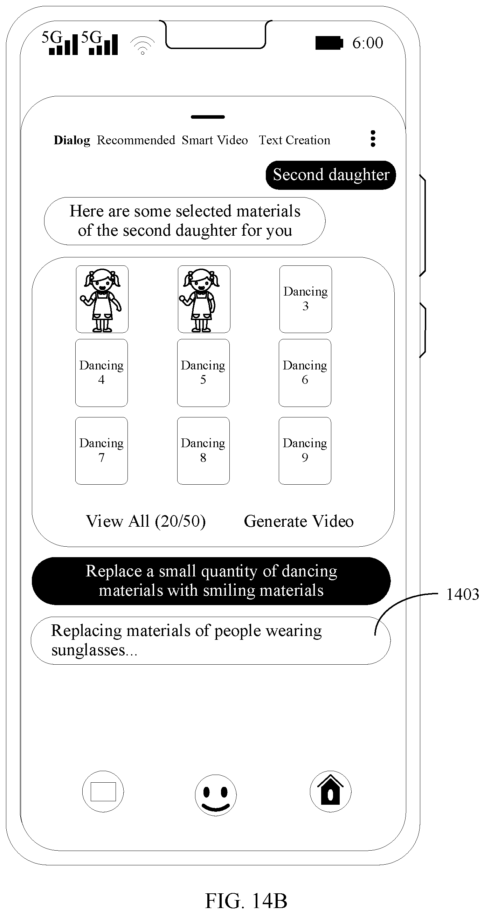

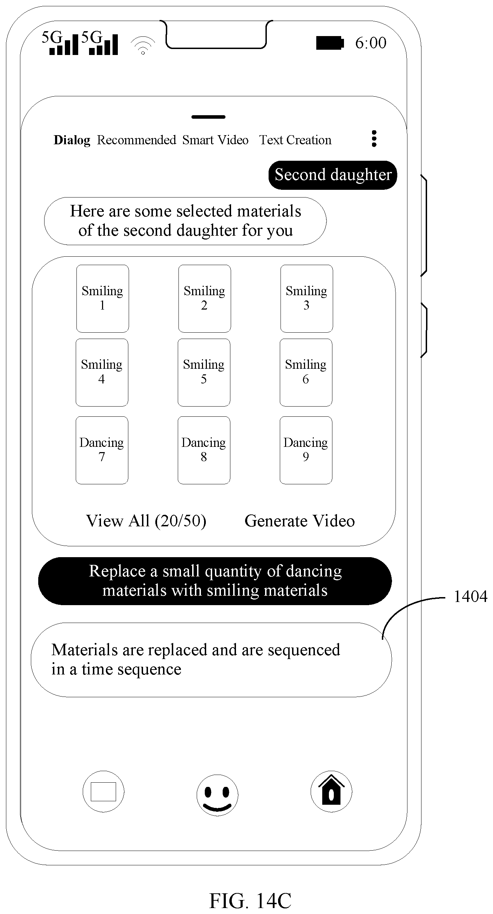

For example, the voice assistant receives an operation of the user indicating, through voice, "replace a small quantity of dancing materials with smiling materials", and an intelligent interaction interface 1401 shown in FIG. 14A is displayed. Prompt information is displayed on the intelligent interaction interface 1401 to inform that the voice assistant is searching for the materials of the second daughter smiling. After the voice assistant finds the materials of the second daughter smiling (a fifth material), the voice assistant directly replaces 30% (that is, 20*30%=6 materials) of the dancing materials in the original materials with the smiling materials. In a replacement process, prompt information 1403 shown in FIG. 14B is displayed to inform the user that the voice assistant is replacing the materials. After completing the material replacement, the voice assistant displays prompt information 1404 shown in FIG. 14C to inform the user that material replacement is completed. It can be learned that the user may intuitively determine an entire process of material replacement through the intelligent interaction interface.

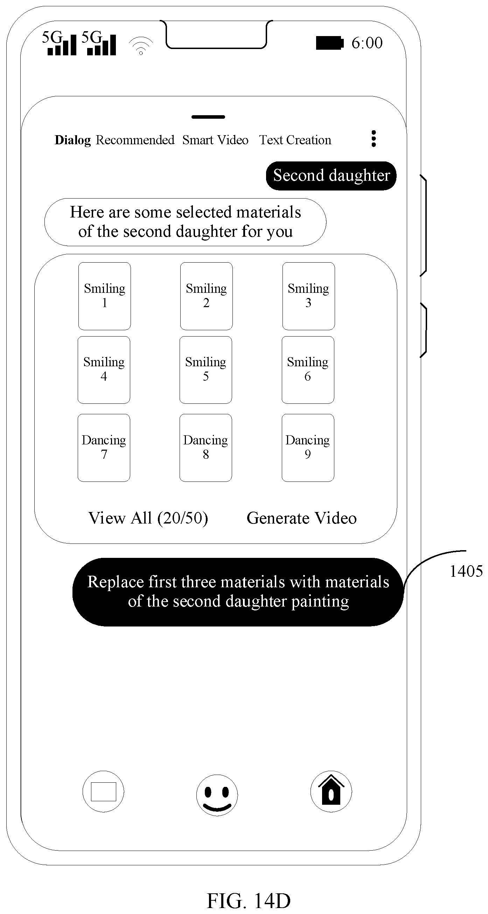

For example, the speech message, received by the voice assistant, of the user indicating, through voice, material replacement explicitly indicates the quantity of materials to be replaced, the voice assistant may directly determine the quantity of materials to be replaced this time. For example, a speech message, received by the voice assistant, indicated by the user through voice is "replace first three materials with materials of the second daughter painting", and the voice assistant determines that three materials are replaced this time. For example, prompt information 1405 displayed on an intelligent interaction interface shown in FIG. 14D explicitly indicates the quantity of materials to be replaced.

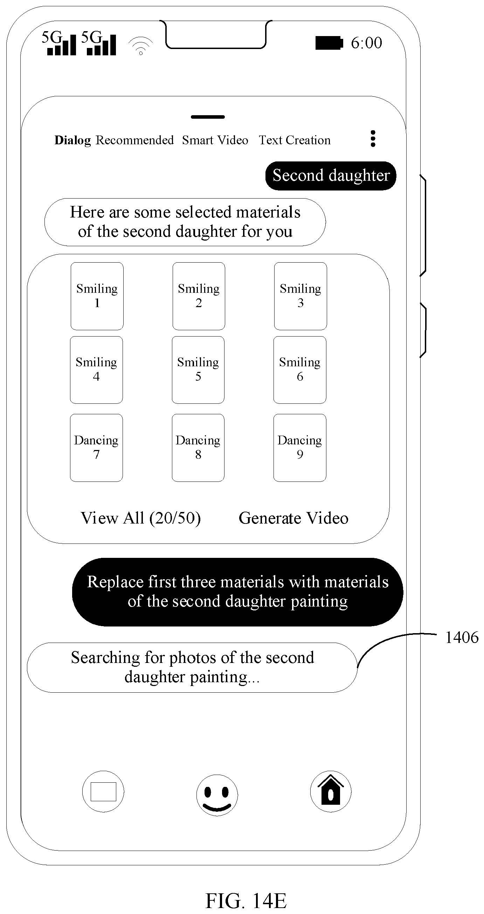

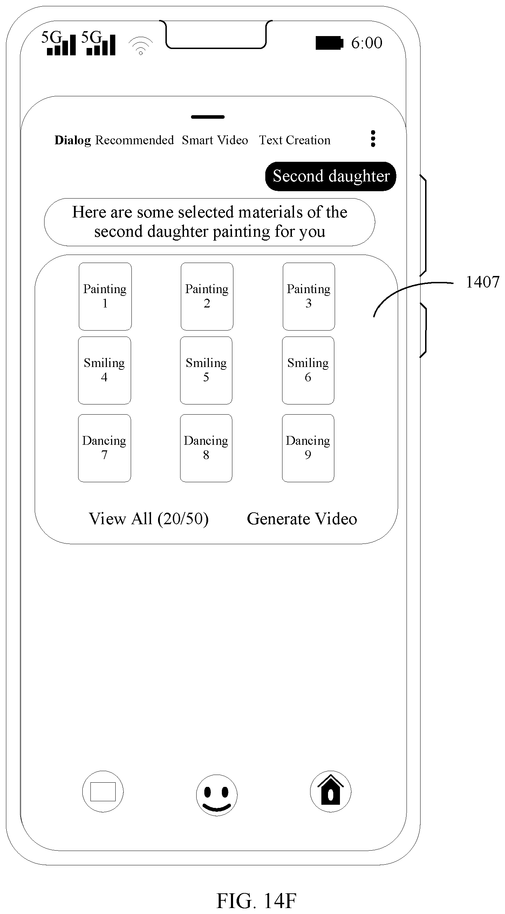

In some cases, the voice assistant receives an operation of the user indicating, through voice, material replacement. In response to the operation of the user, prompt information 1406 shown in FIG. 14E is displayed to inform the user that the voice assistant is searching for the materials. When the voice assistant finds a photo of the second daughter painting, the voice assistant performs a process of material replacement. After the voice assistant finishes material replacement, a material 1407 shown in FIG. 14F is displayed. When the voice assistant does not find the photo of the second daughter painting, prompt information may be displayed on the intelligent interaction interface to inform the user that no material is found.

In some other embodiments, in response to a voice indication operation of the user, the voice assistant may delete some materials based on the materials corresponding to the target theme to generate the target video based on the remaining materials, so that all materials in the generated target video are materials expected by the user.

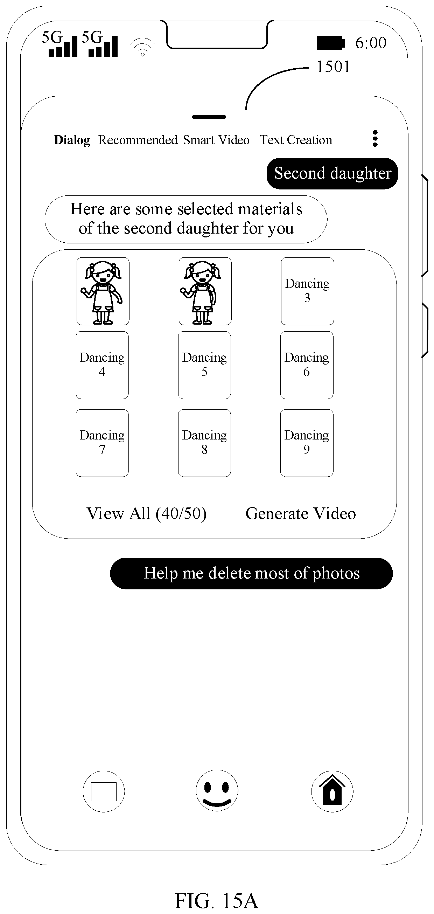

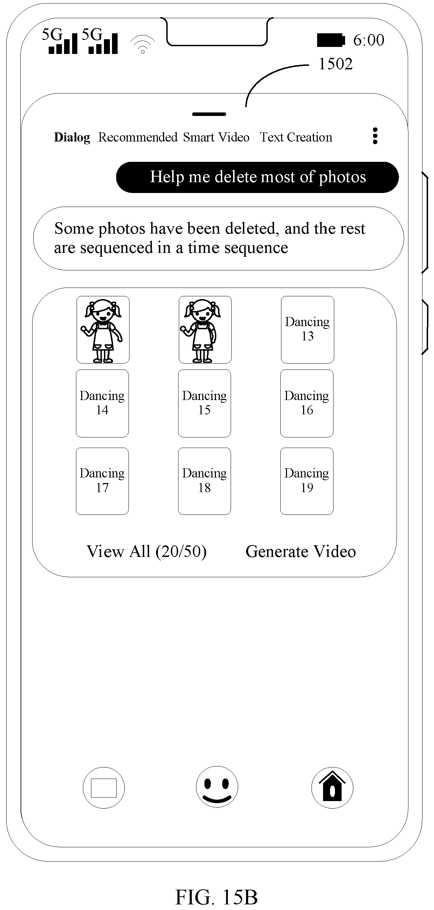

For example, in a process in which the voice assistant finds the materials of the second daughter dancing and displays the materials on the intelligent interaction interface, the voice assistant receives an operation of the user indicating, through voice, photo deletion. In response to the operation of the user, an intelligent interaction interface 1501 shown in FIG. 15A is displayed, where prompt information is displayed on the intelligent interaction interface 1501 to inform content used for voice indication. Herein, the user indicates, through voice, "help me delete most of photos". The voice assistant determines, based on a quantity of original materials corresponding to the target theme, to delete 20 photos and displays an intelligent interaction interface 1502 shown in FIG. 15B. It may be understood as that a speech message, received by the voice assistant, of the user indicating, through voice, material deletion is "replace a large quantity of/most of/many materials", and the voice assistant determines that an upper limit value of materials to be deleted is a material quantity 5 (for example, the material quantity 5 is 50% of the original material quantity).

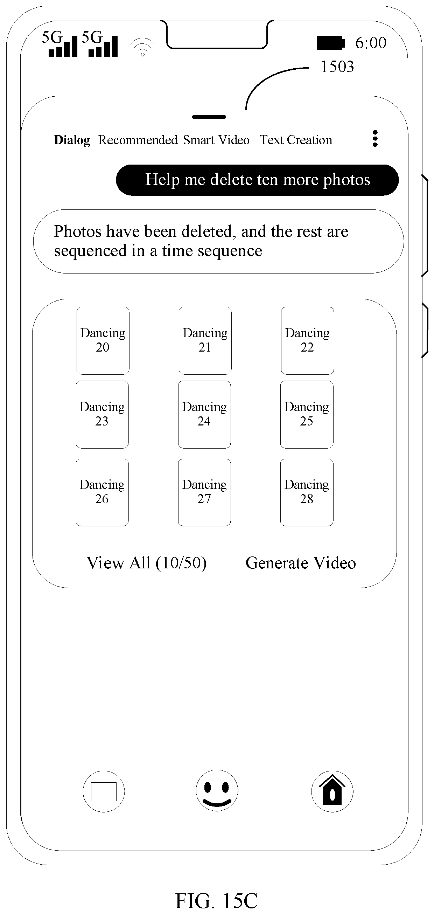

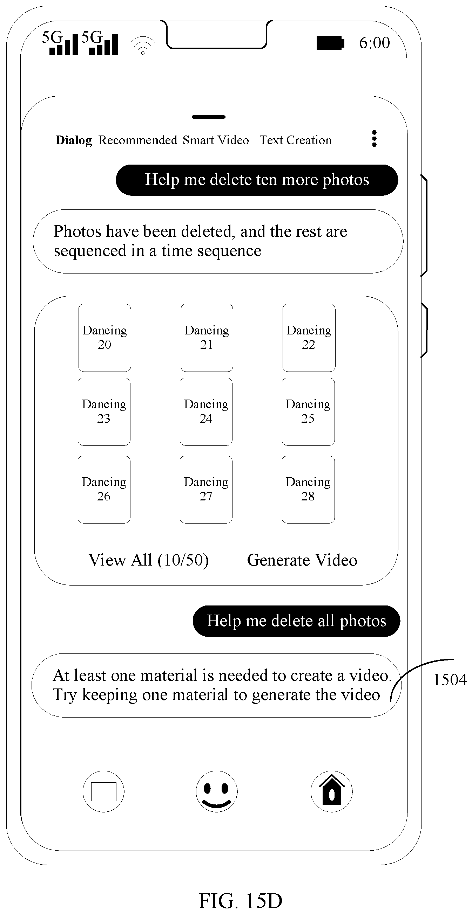

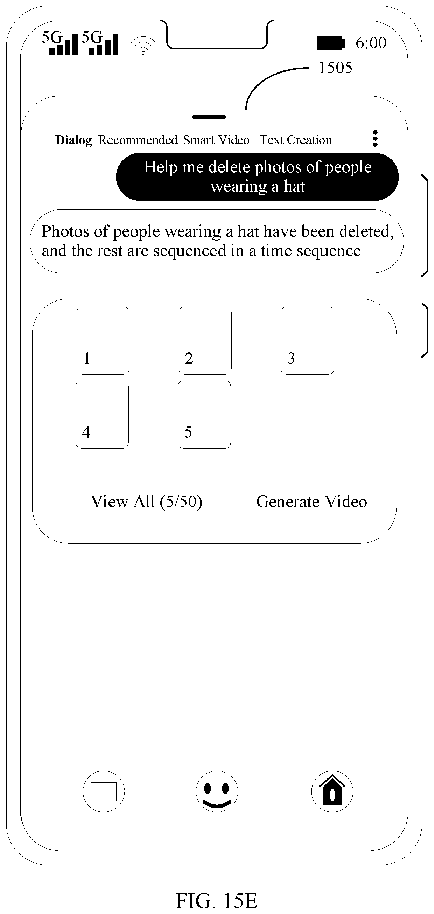

A deletion indication received by the voice assistant explicitly indicates a quantity or a type of to-be-deleted materials, and the voice assistant may directly delete a corresponding quantity or type of materials. For example, it is assumed that, after the voice assistant displays the intelligent interaction interface 1502 shown in FIG. 15B, the voice assistant continues to receive an operation of the user indicating, through voice, "help me delete ten more photos". In response to the operation of the user, the voice assistant deletes ten photos in the materials and displays an intelligent interaction interface 1503 shown in FIG. 15C. Then, it is assumed that, after the voice assistant displays the intelligent interaction interface 1503 shown in FIG. 15C, the voice assistant receives an operation of the user indicating, through voice, "help me delete all photos". In response to the operation of the user, prompt information 1504 shown in FIG. 15D is displayed to inform the user that at least one material is needed for generating the video. That is, the voice assistant does not perform the operation of deleting all materials. For example, in an intelligent interaction interface 1505 shown in FIG. 15E, the voice assistant receives an operation of the user indicating, through voice, "help me delete a photo of people wearing a hat". In response to the operation of the user, the voice assistant deletes the photo of people wearing a hat and displays materials after deletion.

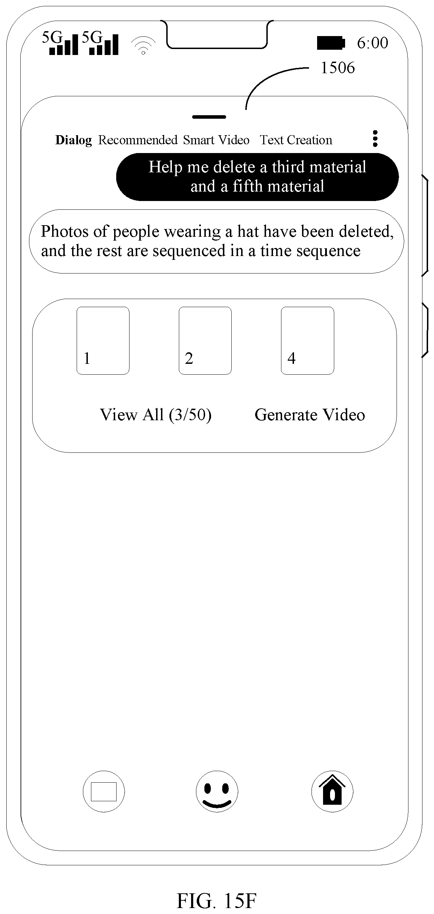

After displaying the intelligent interaction interface 1505 shown in FIG. 15E, the voice assistant receives an operation of the user indicating, through voice, "help me delete a third material and a fifth material". The voice assistant deletes the corresponding materials and displays, on the intelligent interaction interface, remaining materials after material deletion, for example, an intelligent interaction interface 1506 shown in FIG. 15F.

It may be understood as that, after the voice assistant receives the operation of the user indicating material deletion, the voice assistant may randomly select a material from the materials corresponding to the target theme for deletion, or the voice assistant may determine a to-be-deleted material based on a time identifier of the material. For another example, the voice assistant may determine a specially specified material as the to-be-deleted material, and the like. The material specifically deleted by the voice assistant is not limited in this embodiment of this application.

In some other embodiments, the voice assistant may adjust a sequence of materials in response to a voice indication operation of the user, so that a sequence for playing materials in a target video generated based on materials after sequence adjustment can meet a user requirement.

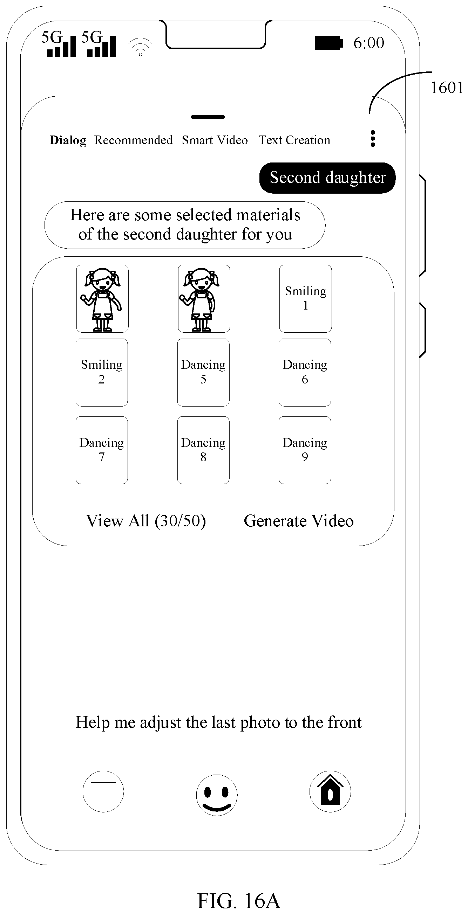

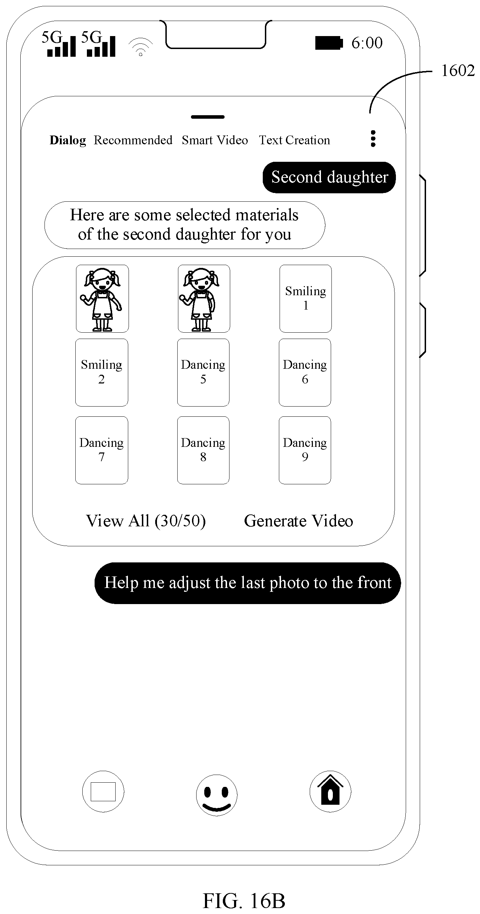

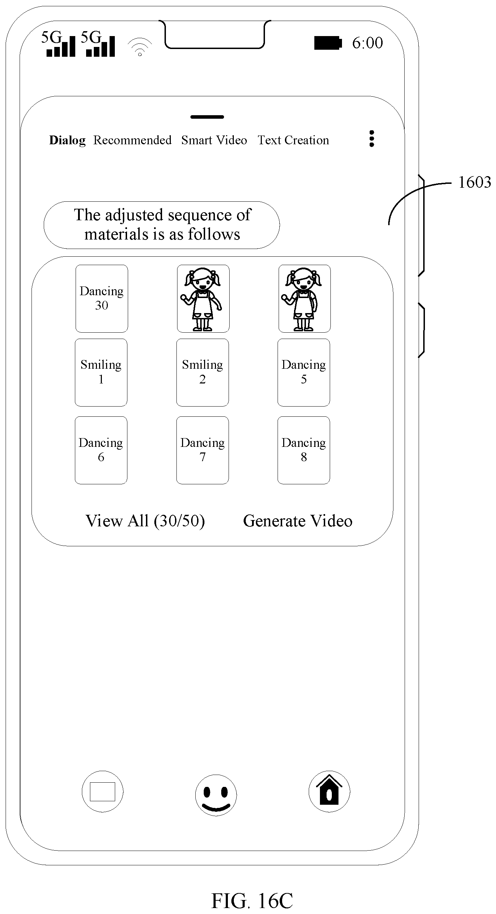

For example, in an intelligent interaction interface 1601 shown in FIG. 16A, the voice assistant receives an operation of the user indicating, through voice, "help me adjust the last photo to the front", and displays an intelligent interaction interface 1602 shown in FIG. 16B in response to the operation of the user. Prompt information is displayed on the intelligent interaction interface 1602 to inform information indicated by the user through voice. After completing sequence reordering, the voice assistant displays an intelligent interaction interface 1603 shown in FIG. 16C. Materials displayed on the intelligent interaction interface 1603 are materials (a seventh material) after sequence adjustment. The seventh material includes same materials as those in the first material, and a sequence of the materials in the seventh material is different from a sequence of the materials in the first material.

It should be explained that a processing operation of addition, replacement, deletion, or sequence reordering performed by the voice assistant on the materials corresponding to the target theme in the foregoing FIG. 12A to FIG. 16C is merely an example. After the voice assistant finds the materials corresponding to the target theme, the voice assistant may perform at least one processing operation of addition, replacement, sequence reordering, or deletion on the materials corresponding to the target theme in response to an indication operation of the user. For example, after the voice assistant receives an operation of the user indicating, through voice, "delete painting materials and add materials of a child running", the voice assistant performs a process of material deletion and material addition in response to the operation of the user.

In this embodiment of this application, after the voice assistant generates the target video based on the materials corresponding to the target theme, the voice assistant may perform an operation such as sharing, downloading, or deletion on the target video in response to a trigger operation of the user. That is, the user can implement the operation on the target video without a need to download the target video to the mobile phone for local storage. For example, still as shown in FIG. 9D, an area 906 is further displayed on the intelligent interaction interface 904, and the area 906 includes controls for performing operations on the target video. For example, the area 906 includes controls such as "Like", "Dislike", "Share", "Download", and "Delete". The voice assistant receives a trigger operation of the user on a control in the area 906 and performs a corresponding function in response to the trigger operation of the user. For example, the voice assistant receives a trigger operation of the user on the "Download" control. In response to the trigger operation of the user, the voice assistant downloads the target video displayed on the intelligent interaction interface 904 to the mobile phone for local storage. After the voice assistant downloads the target video to the mobile phone for local storage, the voice assistant may inform, through voice, the user that the video is saved. For example, the voice assistant outputs prompt information "video saved". Alternatively, prompt information is displayed on the intelligent interaction interface 904 to inform the user that the video is saved.

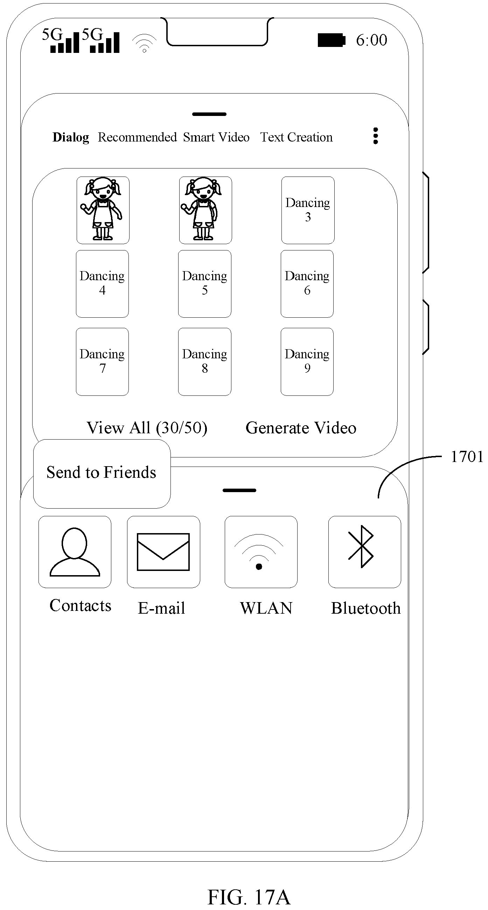

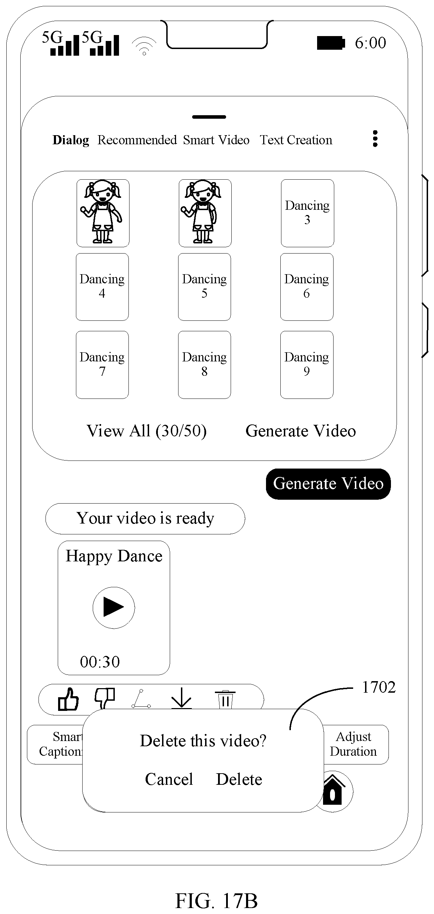

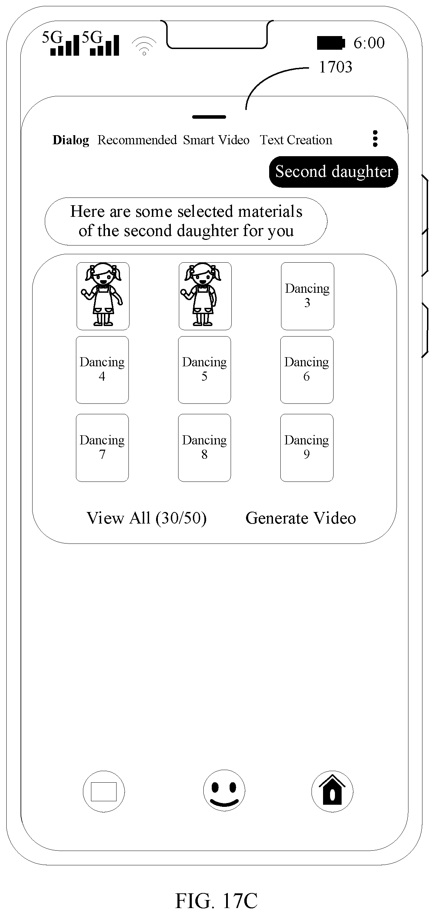

For another example, the voice assistant receives a trigger operation of the user on the "Share" control, and displays a sharing card 1701 shown in FIG. 17A in response to the trigger operation of the user. It can be learned that the user may share the target video without downloading the target video to the gallery for storage. This improves user experience. For another example, the voice assistant receives a trigger operation of the user on the "Delete" control in the area 906, and displays a deletion card 1702 shown in FIG. 17B in response to the trigger operation of the user. The voice assistant receives a trigger operation of the user on a "Delete" control in the deletion card 1702. In response to the operation of the user, the voice assistant deletes the target video and displays an interface 1703 shown in FIG. 17C.

In addition, the voice assistant may further edit the target video, for example, adjust duration or change background music, in response to an operation of the user. Still as shown in FIG. 9D, the intelligent interaction interface 904 further includes controls such as "Smart Captioning", "Change Template", "Change Music", and "Adjust Duration". The voice assistant receives a trigger operation of the user on any control and performs a corresponding function in response to the operation of the user. For example, the voice assistant receives a trigger operation of the user on the "Change Music" control. In response to the operation of the user, the voice assistant performs a process of changing background music of the target video.

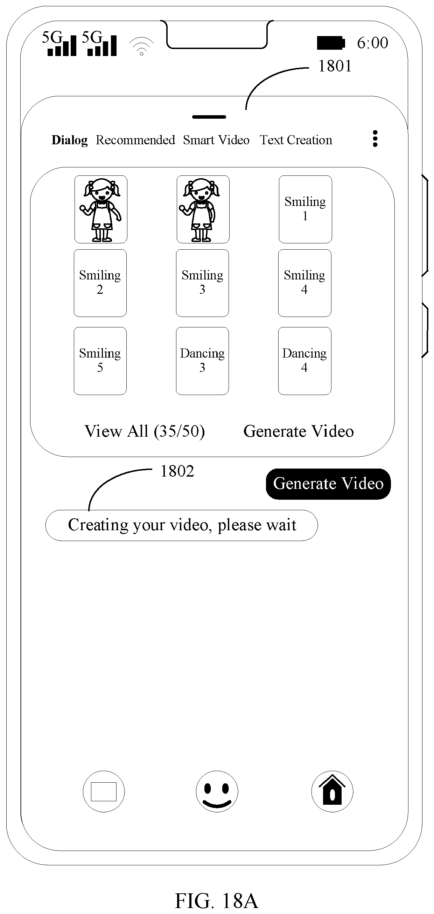

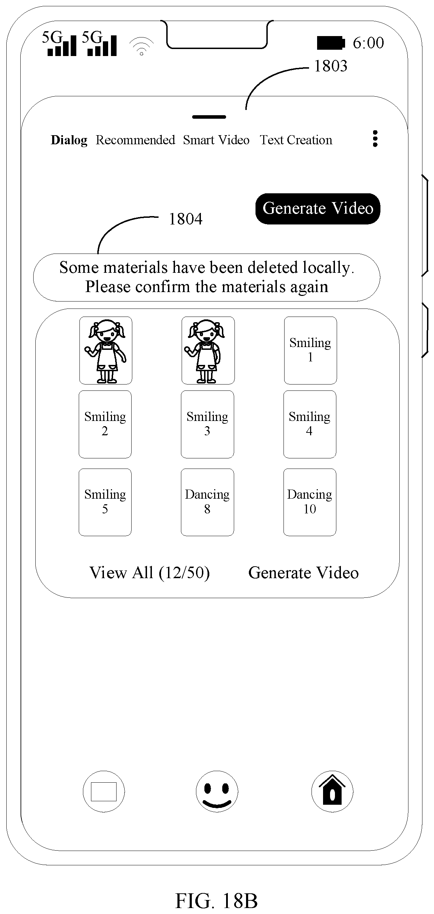

In some embodiments, after the voice assistant receives the operation of the user indicating to generate a video, the voice assistant determines that the materials corresponding to the target theme in the gallery have been deleted. In this case, the voice assistant cannot generate the video. For example, after receiving the operation of the user indicating to generate a video, the voice assistant displays an intelligent interaction interface 1801 shown in FIG. 18A. Prompt information 1802 is displayed on the intelligent interaction interface 1801 to inform that the voice assistant is creating the video. If the voice assistant determines that some materials corresponding to the target theme have been deleted locally, an intelligent interaction interface 1803 shown in FIG. 18B is displayed, and prompt information 1804 is displayed on the intelligent interaction interface 1803 to inform that some materials have been deleted locally and the materials need to be confirmed again.

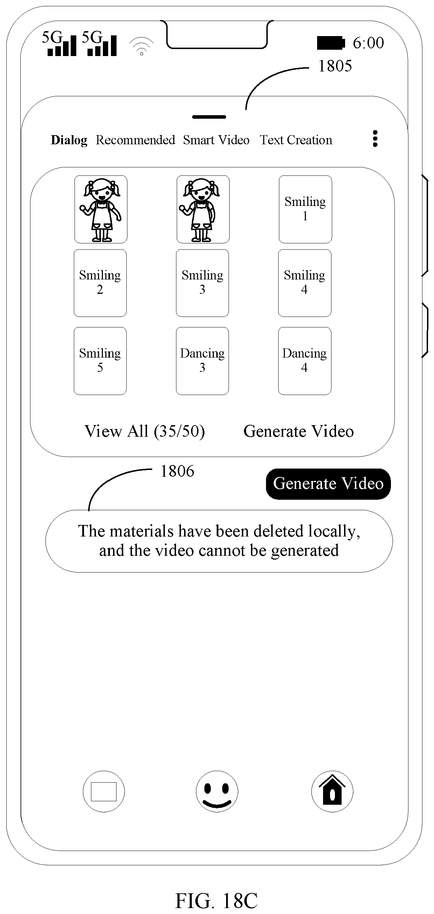

If the voice assistant determines that all materials corresponding to the target theme have been deleted locally, an intelligent interaction interface 1805 shown in FIG. 18C is displayed, and prompt information 1806 is displayed on the intelligent interaction interface 1805 to inform that the materials have been deleted locally and the video cannot be generated.

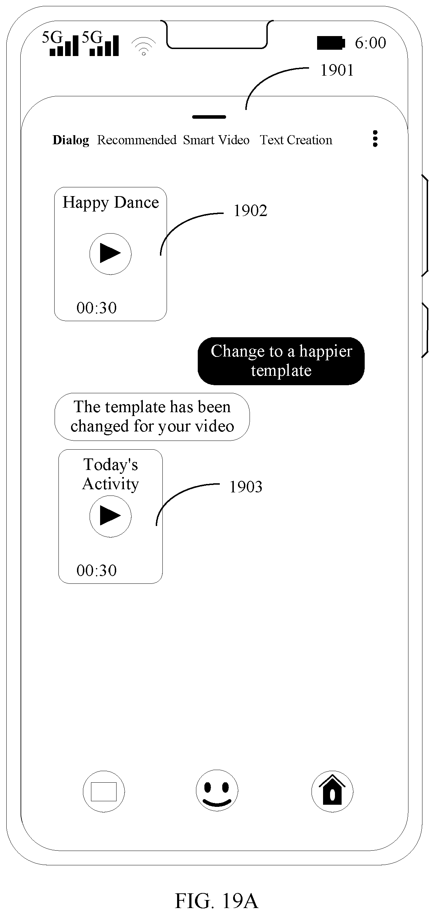

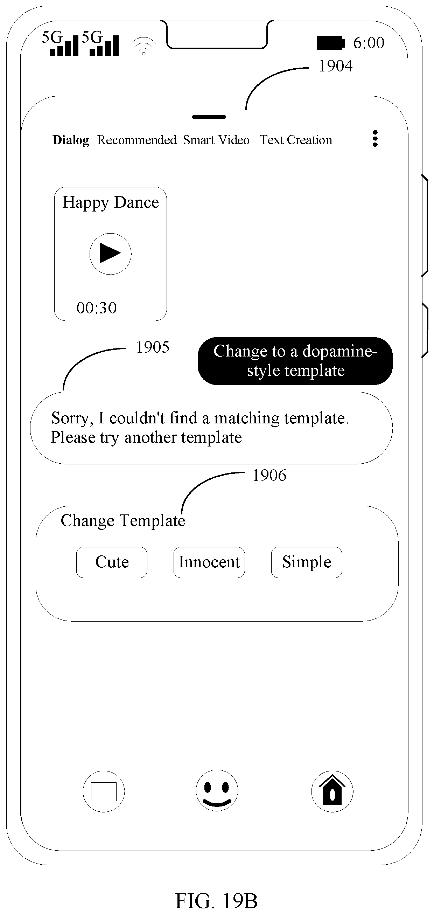

In some embodiments, the voice assistant may receive an operation of the user triggering a change of a template of the target video. In response to the operation of the user, the voice assistant performs a corresponding function. For example, after a target video 1902 is displayed on an intelligent interaction interface 1901 shown in FIG. 19A, the voice assistant receives an operation of the user indicating "change to a happier template". In response to the operation of the user, the voice assistant changes the template of the target video and displays a changed target video 1903. In an intelligent interaction interface 1904 shown in FIG. 19B, the voice assistant again receives an operation of the user indicating to change the template. In response to the indication operation of the user, the voice assistant does not find a corresponding template, and prompt information 1905 is displayed on the intelligent interaction interface 1904 to inform that no corresponding template is found and the user can try another template. Recommended templates are displayed in an area 1906.

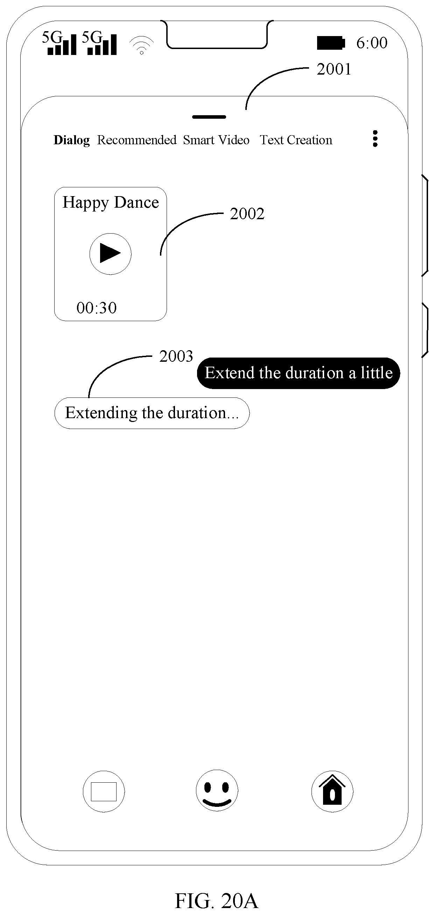

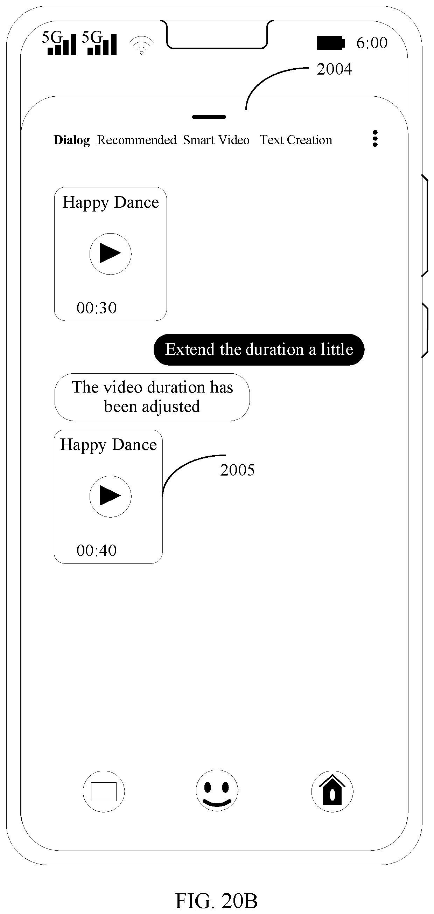

In some embodiments, the voice assistant may receive an operation of the user triggering adjustment of duration of the target video. In response to the operation of the user, the voice assistant adjusts the duration of the target video. For example, after a target video 2002 is displayed on an intelligent interaction interface 2001 shown in FIG. 20A, the voice assistant receives an operation of the user indicating "extend the duration a little". In response to the operation of the user, prompt information 2003 is displayed to inform that the duration is being extended. After completing the duration extension operation on the target video, the voice assistant displays an intelligent interaction interface 2004 shown in FIG. 20B, and an adjusted video 2005 is displayed on the intelligent interaction interface 2004.

When the user does not explicitly indicate adjustment duration for the video, the voice assistant extends or shortens the video by preset duration. For example, the preset duration is 5s or 10s.

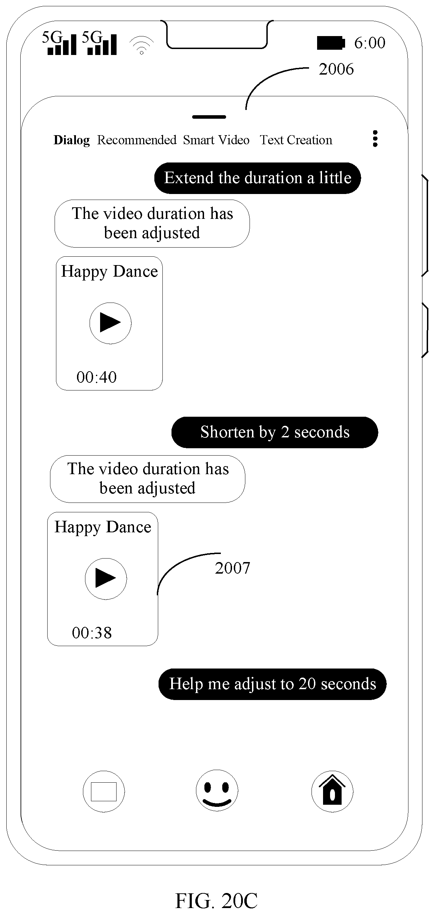

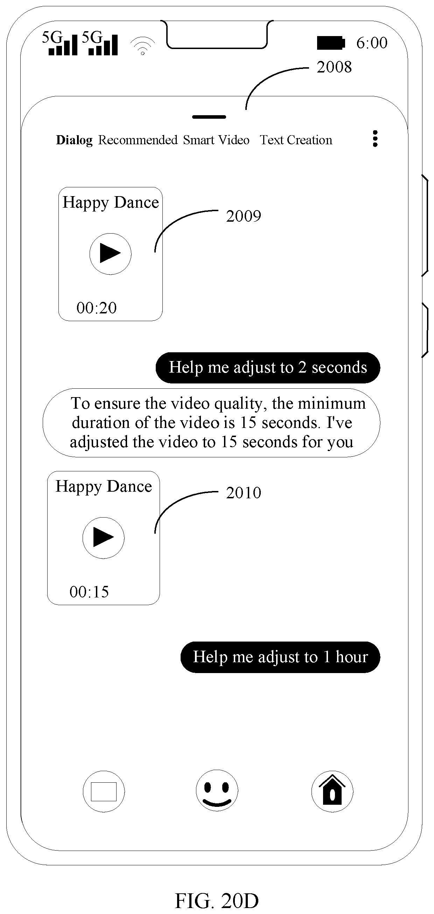

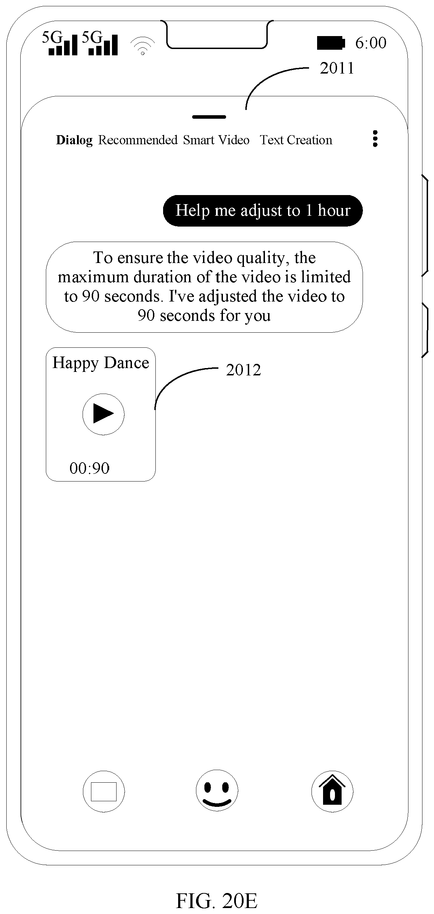

When the user explicitly indicates adjustment duration for the video, the voice assistant extends or shortens the target video based on the duration indicated by the user. For example, after the target video is displayed on an intelligent interaction interface 2006 shown in FIG. 20C, the voice assistant receives an operation of the user indicating "shorten by 2 seconds" and displays, in response to the operation of the user, a target video 2007 after duration adjustment. For another example, the voice assistant receives an operation of the user indicating "help me adjust to 20 seconds", and displays an intelligent interaction interface 2008 shown in FIG. 20D in response to the operation of the user. An adjusted video 2009 is displayed on the intelligent interaction interface 2008. Duration of the video 2009 is 20 seconds. The voice assistant receives an operation of the user indicating "help me adjust to 2 seconds", and prompt information and an adjusted video 2010 are displayed on the intelligent interaction interface 2008, where the prompt information informs minimum video duration. Similarly, the voice assistant receives an operation of the user indicating "help me adjust to 1 hour", and prompt information and an adjusted video 2012 are displayed on an intelligent interaction interface 2011 shown in FIG. 20E, where the prompt information informs maximum video duration. That is, for effect of the video, the voice assistant cannot adjust the duration of the video beyond the maximum duration or below the minimum duration.

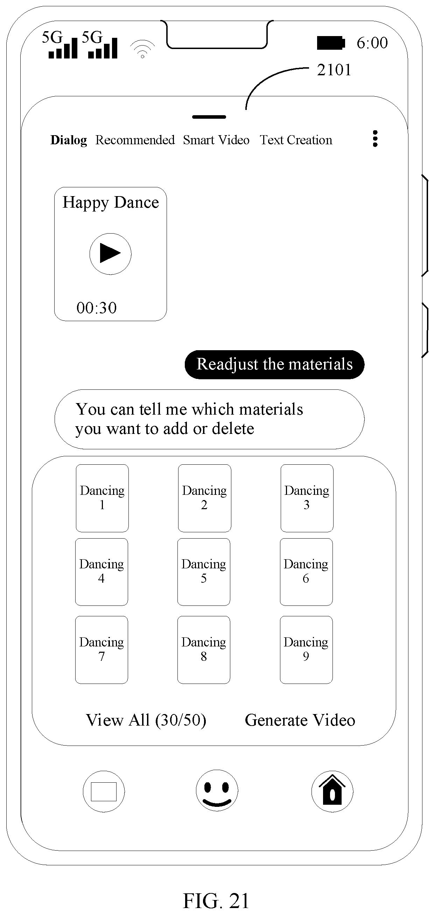

In some embodiments, the voice assistant may adjust the materials in the target video to generate a new video based on adjusted materials. For example, as shown in FIG. 21, the voice assistant receives an operation of the user indicating "adjust the materials". In response to the operation of the user, the materials of the target video are displayed on the intelligent interaction interface 2101. The voice assistant obtains adjusted materials in response to a deletion operation of the user on the materials of the target video or an operation of adding a material, and the voice assistant generates the new video based on the adjusted materials.

The foregoing embodiment illustrate the video generation process by using an example in which the object corresponding to the target theme is a plurality of portraits. Certainly, an object type in this solution may be a portrait, a pet, a different geographical location, or the like. For example, after the voice assistant receives an operation of the user indicating "generate a video of a pet playing", the voice assistant determines, based on a clustering result of the gallery, that there are three materials corresponding to the pet in the gallery, and three images of the pet may be displayed on the intelligent interaction interface. For another example, the voice assistant receives an operation of the user indicating "generate a video of a vacation trip". The voice assistant determines, based on a clustering result of the gallery, that there are trip materials of a plurality of locations in the gallery. For example, the voice assistant determines that there are trip materials of cities A, B, and C, and images of cities A, B, and C may be displayed on the intelligent interaction interface for the user to select to determine a target city.

It should be noted that, in the foregoing description, before the voice assistant receives an operation of the user indicating to generate the target video corresponding to the target theme, the gallery has performed image recognition on images in the gallery. Image recognition may be processing, such as clustering and semantic recognition, performed by the gallery on the images in the gallery, and a specific image recognition process is not specifically described herein.

However, in a possible case, before the voice assistant receives the operation of the user indicating to generate the target video corresponding to the target theme, the voice assistant determines that the gallery does not perform image recognition on the images in the gallery, and the voice assistant may guide, in a voice or text manner, the user to indicate the gallery to perform the image recognition operation. After determining that the gallery complete image recognition, the voice assistant finds, based on an image recognition result, the materials corresponding to the target theme, to generate the target video based on the materials corresponding to the target theme.

It may be understood that, to implement the foregoing functions, the electronic device and the like include a hardware structure and/or a software module corresponding to each function. A person skilled in the art should be easily aware that units, algorithms, and steps in examples described with reference to embodiments disclosed in this specification can be implemented in embodiments of this application by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that this implementation goes beyond the scope of embodiments of the present invention.

Functional module division may be performed on the electronic device based on the foregoing method example in embodiments of this application. For example, the functional modules may be obtained through division for corresponding functions, or two or more functions may be integrated into one processing module. The integrated module may be implemented in a form of hardware, or may be implemented in a form of a software functional module. It should be noted that in embodiments of the present invention, module division is an example, and is merely a logical function division. During actual implementation, another division manner may be used.

When functional modules are obtained through division by using corresponding functions, according to a diagram of possible composition of an electronic device related to the foregoing embodiments, the electronic device may include: a display unit, a transmission unit, a processing unit, and the like. It should be noted that all related content of the steps in the foregoing method embodiments may be cited in function descriptions of corresponding functional modules. Details are not described herein again.

An embodiment of this application further provides an electronic device, including one or more processors and one or more memories. The one or more memories are coupled to the one or more processors. The one or more memories are configured to store computer program code. The computer program code includes computer instructions. When the one or more processors execute the computer instructions, the electronic device is enabled to perform the related method steps to implement the video generation method in the foregoing embodiments.

An embodiment of this application further provides a computer-readable storage medium. The computer-readable storage medium stores computer instructions. When the computer instructions are run on an electronic device, the electronic device is enabled to perform the related method steps to implement the video generation method in the foregoing embodiments.

An embodiment of this application further provides a computer program product. The computer program product includes computer instructions. When the computer instructions are run on an electronic device, the electronic device is enabled to perform the related method steps to implement the video generation method in the foregoing embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus is run, the processor may execute the computer-executable instructions stored in the memory, to enable the apparatus to perform the video generation method performed by an electronic device in the foregoing method embodiments.

The electronic device, the computer-readable storage medium, the computer program product, or the apparatus provided in this embodiment are all used to execute the corresponding method provided above. Therefore, for beneficial effect that can be achieved by the electronic device, the computer readable storage medium, and the computer program product, or the apparatus, refer to beneficial effect of the corresponding method provided above. Details are not described herein again.

The foregoing descriptions about implementations allow a person skilled in the art to clearly understand that, for the purpose of convenient and brief description, division of the foregoing functional modules is used as an example for illustration. During actual application, the foregoing functions can be allocated to different modules for implementation according to a requirement, that is, an inner structure of an apparatus is divided into different functional modules to implement all or some of the functions described above. For a detailed working process of the foregoing described system, apparatus, and unit, refer to a corresponding process in the foregoing method embodiments. Details are not described herein again.

Functional units in embodiments of this application may be integrated into one processing unit, or each of the units may exist alone physically, or two or more units are integrated into one unit. The integrated unit may be implemented in a form of hardware, or may be implemented in a form of a software functional unit.

If the integrated unit is implemented in the form of a software functional unit and sold or used as an independent product, the integrated unit may be stored in a computer-readable storage medium. Based on such an understanding, the technical solutions of embodiments of this application essentially, or the part contributing to a conventional technology, or all or some of the technical solutions may be implemented in a form of a software product. The computer software product is stored in a storage medium and includes several instructions for instructing a computer device (which may be a personal computer, a server, or a network device) or a processor to perform all or some of the steps of the method described in embodiments of this application. The foregoing storage medium includes any medium that can store program code, such as a flash memory, a removable hard disk, a read-only memory, a random access memory, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A video generation method, applied to an electronic device comprising a voice assistant, wherein the method comprises:
receiving a first operation of a user triggering generation of a target video corresponding to a target theme;
in response to the first operation, displaying an interface of the voice assistant, wherein the interface of the voice assistant comprises at least one candidate object corresponding to a keyword of the target theme;
receiving a second operation of the user on a target object in the at least one candidate object;
in response to the second operation, displaying a first material corresponding to the target object on the interface of the voice assistant, wherein the first material is an image or a video found by the voice assistant from a gallery of the electronic device;
receiving a third operation of the user triggering generation of the target video; and
in response to the third operation, displaying a thumbnail of the target video on the interface of the voice assistant, wherein the target video is generated based on the first material corresponding to the target object.

2. The method according to claim 1, wherein in the process of displaying the first material corresponding to the target object on the first interface, the method further comprises:
receiving a fourth operation of the user; and
in response to the fourth operation, displaying, on the interface of the voice assistant, a target material obtained by performing material processing on the first material corresponding to the target object, wherein the material processing comprises at least one of material addition, material replacement, material deletion, or material sequence reordering.

3. The method according to claim 2, wherein the method comprises:
if the fourth operation of the user indicates a quantity based on which the material processing is to be performed on the first material, performing the material processing based on the indicated quantity; or
if the fourth operation of the user does not indicate a quantity based on which the material processing is to be performed on the first material, performing the material processing on the first material based on a preset quantity, wherein the preset quantity is less than a quantity threshold; when speech or text semantics corresponding to the fourth operation does not indicate the quantity based on which the material processing is to be performed on the first material, the preset quantity is a quantity for a level corresponding to the speech or text semantics; and different levels correspond to different quantities.

4. The method according to claim 2 or 3, wherein the material processing is material addition, the target material displayed on the interface of the voice assistant comprises total materials obtained by adding a second material for the target object, and the total materials comprise the first material and the second material.

5. The method according to any one of claims 2 to 4, wherein the material processing is material addition, and the method further comprises:
in response to the fourth operation, displaying first prompt information on the interface of the voice assistant, wherein the first prompt information is used to inform that a quantity of total materials corresponding to the target object reaches an upper limit.

6. The method according to claim 5, wherein the method further comprises:
receiving a fifth operation of the user; and
in response to the fifth operation, displaying a third material on the interface of the voice assistant, wherein the third material comprises materials obtained by deleting a part of the total materials and adding a fourth material.

7. The method according to claim 2 or 3, wherein the material processing is material replacement, the target material displayed on the interface of the voice assistant comprises a sixth material obtained by replacing a part of the material of the target object with a fifth material, and the sixth material comprises the fifth material and a part of the first material.

8. The method according to claim 2 or 3, wherein the material processing is material deletion, and the target material displayed on the interface of the voice assistant comprises a part of the first material after material deletion.

9. The method according to claim 2 or 3, wherein the material processing is material sequence reordering, the target material displayed on the interface of the voice assistant comprises a seventh material, the seventh material comprises same materials as those in the first material, and a sequence of the materials in the seventh material is different from a sequence of the materials in the first material.

10. The method according to any one of claims 1 to 9, wherein the method further comprises:
receiving a sixth operation of the user; and
in response to the sixth operation, editing an object name of the at least one candidate object displayed on the interface of the voice assistant, wherein the editing comprises name addition, name modification, or name deletion.

11. The method according to any one of claims 1 to 10, wherein the method further comprises:
receiving a seventh operation of the user; and
in response to the seventh operation, displaying a target interface, wherein the target interface comprises the at least one candidate object and another candidate object; and
the receiving a second operation of the user on a target object in the at least one candidate object comprises:
receiving the second operation of the user on the target object in the candidate objects on the target interface.

12. The method according to any one of claims 1 to 11, wherein the method further comprises:
if a deletion operation of the user on the target video is received, in response to the deletion operation, stopping displaying a thumbnail of the target video on the interface of the voice assistant;
if a sharing operation of the user on the target video is received, in response to the sharing operation, displaying a sharing interface on the interface of the voice assistant;
if a template change operation of the user on the target video is received, in response to the template change operation, displaying, on the interface of the voice assistant, a video obtained by changing a template; and
if a duration adjustment operation of the user on the target video is received, in response to the duration adjustment operation, displaying, on the interface of the voice assistant, a video obtained by adjusting duration.

13. The method according to any one of claims 1 to 12, wherein the first operation is a voice indication operation, and after the receiving a first operation of a user triggering generation of a target video corresponding to a target theme, the method further comprises:
performing semantic analysis on first speech information indicated by the first operation; and
if semantics corresponding to the first speech information is recognized, determining, based on the recognized semantics, the keyword corresponding to the target theme; or
if semantics corresponding to the first speech information is not recognized, or no candidate object that matches the keyword is identified from the gallery, displaying second prompt information on the interface of the voice assistant, wherein the second prompt information is used to inform to adjust the voice indication operation.

14. The method according to any one of claims 1 to 13, wherein after the receiving a second operation of the user on a target object in the at least one candidate object, the method further comprises:
performing semantic analysis on second speech information indicated by the second operation; and
if semantics corresponding to the second speech information is not identified, or no target object that matches the semantics corresponding to the second speech information is identified from the at least one candidate object, displaying third prompt information on the interface of the voice assistant, wherein the third prompt information is used to inform the user to select another candidate object.

15. The method according to any one of claims 1 to 14, wherein the candidate object is a person, an image of the candidate object is displayed on the interface of the voice assistant, the image of the candidate object comprises a portrait, and the target theme comprises a keyword related to the person.

16. An electronic device, comprising:
one or more processors; and
a memory, wherein
the memory stores one or more computer programs, the one or more computer programs comprise instructions, and when the instructions are executed by the electronic device, the electronic device is enabled to perform the video generation method according to any one of claims 1 to 15.

17. A computer-readable storage medium, wherein the computer-readable storage medium stores instructions, and when the instructions are run on an electronic device, the electronic device is enabled to perform the video generate method according to any one of claims 1 to 15.
